# EUROPÄISCHE PATENTSCHRIFT

(11) **EP 3 599 073 B1**
(45) Veröffentlichungstag und Bekanntmachung des Hinweises auf die Patenterteilung: **14.08.2024**
(21) Anmeldenummer: 19179070.8
(22) Anmeldetag: 07.06.2019
(51) Int. Cl.: B29C 48/265, B29C 48/25, B29C 48/14, B29C 48/50, A01G 13/04, B65D 90/02, B29C 45/17

(54) **SCHUTZABDECKUNG FÜR EINE MASCHINE, INSBESONDERE EINEN EXTRUDER, UND MASCHINE, INSBESONDERE EXTRUDER, MIT EINER SOLCHEN SCHUTZABDECKUNG**
PROTECTIVE COVER FOR A MACHINE, IN PARTICULAR AN EXTRUDER, AND MACHINE, IN PARTICULAR EXTRUDER, WITH SUCH A PROTECTIVE COVER
COUVERCLE DE PROTECTION POUR UNE MACHINE, EN PARTICULIER UN EXTRUDEUR, MACHINE, EN PARTICULIER EXTRUDEUR, DOTÉE D'UN TEL COUVERCLE DE PROTECTION

(30) Priorität: 26.07.2018 DE 102018118113
(43) Veröffentlichungstag der Anmeldung: 29.01.2020
(73) Patentinhaber: Leistritz Extrusionstechnik GmbH, 90459 Nürnberg (DE)
(72) Erfinder: RECHTER, Frank, 97215 Uffenheim OT Welbhausen (DE); ANDERS , Leon, 33613 Bielefeld (DE)
(74) Vertreter: Lindner Blaumeier Patent- und Rechtsanwälte

(56) Entgegenhaltungen:
- WO-A1-2009/146701
- WO-A1-2011/088516
- AT-U1- 13 881
- JP-A- 2009 292 103
- US-A1- 2011 259 773

## Beschreibung

Schutzabdeckung für eine Maschine, insbesondere einen Extruder, und Maschine, insbesondere Extruder, mit einer solchen Schutzabdeckung Die Erfindung betrifft eine Schutzabdeckung für eine Maschine oder einen Abschnitt einer Maschine.

Es ist aus den Druckschriften WO 2011/088516 A1, US 2011/259773 A1, AT 13 881 U1, WO 2009/146701 A1 und JP 2009 292103 A bekannt, dass Maschinen oder Teile von Maschinen von Gehäusen oder von Schutzabdeckungen abgedeckt sind. Dabei finden beispielsweise aus Edelstahl gefertigte Gehäuse, welche die Maschine vor ungewollten äußeren Einflüssen, wie Beschädigungen, Verschmutzungen oder Ähnlichem, schützen, Anwendung. Derartige Gehäuse weisen neben hohen Kosten in der Fertigung auch den Nachteil auf, dass sie schwer sind daher nur aufwendig entfernt werden können. Insbesondere bei Maschinen, welche während oder nach ihrem Betrieb gereinigt werden müssen, kann das Entfernen von einem Gehäuse oder einem Teil eines Gehäuses notwendig sein, um die erforderliche Reinigung vorzunehmen. Beispielsweise kann bei einem Extruder eine Verschmutzung des Gehäuses aufgrund von in einem Extrusionsprozess verwendeter und/oder für einen Extrusionsprozess zugeführter Farbpigmente auftreten. Insbesondere bei einem Wechsel von Farbpigmenten zwischen zwei Extrusionsprozessen können die Verschmutzungen negative Auswirkungen auf das Ergebnis des nachfolgenden Extrusionsprozesses haben. Ein weiterer Nachteil insbesondere von aus Metall gefertigten Gehäusen ist, dass sie sich beim Abdecken einer Maschine, welche große Menge an Abwärme erzeugt, stark erwärmen können. Dadurch kann für einen Bediener und/oder Personen im Umfeld der Maschine ein Verbrennungsrisiko bei unbeabsichtigtem Berühren des Gehäuses bestehen, was sich nachteilig auf die Arbeitssicherheit an und/oder im Umfeld der Maschine auswirkt. Insbesondere ein Verfahrensteil eines Extruders kann sich bei einem Extrusionsprozess erwärmen und/oder beheizt werden, so dass es Temperaturen annehmen kann, welche einen Berührschutz erforderlich machen können.

Der Erfindung liegt daher die Aufgabe zugrunde, eine Schutzabdeckung für eine Maschine oder einen Abschnitt einer Maschine anzugeben, welche leicht zu reinigen ist und für eine verbesserte Arbeitssicherheit sorgt.

Die Aufgabe wird durch die Merkmale des Anspruchs 1 gelöst.

Die Querträger spannen sich dabei insbesondere im Wesentlichen bogenförmig über die Maschine oder den Abschnitt der Maschine, wobei die Maschine oder der Abschnitt der Maschine von dem an den Querträgern lösbar befestigten, planenartigen Abdeckelement abgedeckt wird. Durch das Abdeckelement wird die Maschine oder der Abschnitt der Maschine vorteilhaft vor Verschmutzungen geschützt. In gleicher Weise wird selbstverständlich auch die Umgebung der Maschine vor von der Maschine oder dem Abschnitt der Maschine erzeugten Verschmutzungen geschützt. Die Verwendung eines planenartigen Abdeckelements bietet dabei den Vorteil, dass aufgrund der Flexibilität bzw. der Biegsamkeit des Abdeckelements sowohl die Montage des Abdeckelements an den Querträgern als auch ein Entfernen des Abdeckelements, insbesondere zu Reinigungszwecken, vereinfacht wird. Durch die lösbare Befestigung des Abdeckelements an den Querträgern wird es ermöglicht, nur das die Maschine bzw. den Abschnitt der Maschine bedeckende Abdeckelement zu entfernen, wodurch sich das abzunehmende Gewicht aufgrund der planenartigen Ausbildung des Abdeckelements vorteilhaft reduziert. Auch die Flexibilität des planenartigen Abdeckelements vereinfacht das Abnehmen sowie eine anschließende Reinigung. Selbstverständlich ist es auch möglich, dass ein verschmutztes Abdeckelement gegen ein sauberes ausgetauscht wird, um eine Standzeit der Maschine während der Reinigung eines Abdeckelements zu verkürzen.

Ein weiterer Vorteil des planenartigen Abdeckelements besteht darin, dass bei einem beispielsweise aus einem Textil oder einer Kunststofffolie gefertigten, planartigen Abdeckelement aufgrund der geringen Wärmeleitfähigkeit von flexiblen, textilen Materialien bzw. Kunststoffen auch ein effizienter Berührschutz gegeben ist. Verglichen mit einem Metallgehäuse erwärmt sich ein planenartiges Abdeckelement während des Betriebes der Maschine schlechter und weist weiterhin eine geringere Wärmeleitfähigkeit auf, so dass bei einem beabsichtigten oder unbeabsichtigten Berühren des Abdeckelements ein Risiko für Verbrennungen reduziert ist.

Ein weiterer Vorteil der erfindungsgemäßen Schutzabdeckung besteht in dem vergleichsweise geringen Gewicht sowie in dem verringerten Fertigungsaufwand bei seiner Herstellung. Neben der Reinigbarkeit und der Verbesserung der Arbeitssicherheit kann somit auch eine Reduktion der Produktionskosten durch eine Vereinfachung der Herstellung vorteilhaft erreicht werden.

Die Form sowie die Anzahl der Querträger kann sich insbesondere nach den Abmessungen und nach der Funktion der Maschine bzw. des Abschnitts der Maschine richten. Im einfachsten Fall umfasst die Schutzabdeckung zwei Querträger, zwischen denen ein sich zwischen den Querträgern und zumindest abschnittsweise längs der Querträger erstreckendes Abdeckelement lösbar befestigt ist. Die Querträger umspannen dabei die Maschine oder den Abschnitt der Maschine in einer Querrichtung, wobei sich das planartige Abdeckelement zumindest abschnittsweise in einer Längsrichtung der Maschine oder des Abschnitts der Maschine längs der Querträger erstreckt. Die Bezeichnungen "Querrichtung" und "Längsrichtung" dienen in diesem Zusammenhang der Unterscheidung zweier Raumrichtungen und beziehen sich nicht notwendigerweise auf eine Funktionalität der Maschine oder des Abschnitts einer Maschine. Abhängig von der Größe der Maschine oder des Abschnitts der Maschine ist es möglich, dass weitere Querträger in Längsrichtung angeordnet sind und/oder dass zwischen den Querträgern mehr als ein planartiges Abdeckelement lösbar befestigt ist.

Für die Querträger kann erfindungsgemäß vorgesehen sein, dass sie sich jeweils in einer Ebene erstrecken, wobei ein Querträger jeweils aus mehreren Trägersegmenten besteht, welche in der Ebene des Querträgers angeordnet sind und jeweils unter einem Winkel aneinander anschließen. Die Ebenen der Querträger können dabei insbesondere orthogonal oder im Wesentlichen orthogonal zu der Längsrichtung des Gestells orientiert und in der Längsrichtung voneinander beabstandet sein. Die Ebenen der Querträger können dabei insbesondere parallel zueinander orientiert sein, das heißt die Querträger erstrecken sich parallel oder im Wesentlichen parallel zu der Querrichtung des Gestells. Die Trägersegmente der Querträger können beispielsweise Profilleisten, insbesondere Hohlprofilleisten, sein und aus Metall oder Kunststoff bestehen. Durch mehrere jeweils unter einem Winkel aneinander anschließende Trägersegmente kann eine Bogenform, eine C-Form, eine U-Form oder Ähnliches des Querträgers gebildet werden. Die Anzahl der dabei verwendeten Trägersegmente zur Bildung eines Querträgers sowie ihre jeweiligen Längen und die Winkel, unter denen die Trägersegmente aneinander anschließen, sind dabei nicht beschränkt und richten sich nach der Größe der durch die Schutzabdeckung abzudeckenden Maschine oder des abzudeckenden Abschnitts der Maschine. Insbesondere ist es auch möglich, dass ein oder mehrere Querträger eine asymmetrische Form aufweisen. Bevorzugt ist vorgesehen, dass die Querträger jeweils eine gleiche Form aufweisen und dass die Querträger bei gleicher Form in Bezug zur Längsrichtung gleich angeordnet sind, da dies die Anordnung des wenigstens einen planartigen Abdeckelements an dem Gestell erleichtert.

Erfindungsgemäß kann vorgesehen sein, dass das Gestell ein oder mehrere Längsträger umfasst, welche die Querträger miteinander verbinden. Die Längsträger können sich dabei in Längsrichtung oder im Wesentlichen in Längsrichtung erstrecken und einen eckigen oder runden Querschnitt aufweisen. Die Längsträger können als Leisten oder als Profile, insbesondere als Hohlprofile, ausgeführt und insbesondere an den Querträgern befestigt sein und/oder aus Metall oder Kunststoff bestehen. Es ist beispielsweise möglich, dass die Längsträger insbesondere an den Bereichen an die Querträger anliegen und/oder an den Querträgern befestigt sind, an denen zwei Trägersegmente eines Querträgers aneinander anliegen. Ein zwischen den Querträgern angeordnetes Abdeckelement kann beispielsweise an einem oder mehreren Längsträgern anliegen, wodurch insbesondere ein Durchhängen des planartigen Abdeckelements zwischen zwei Querträgern verhindert werden kann. Die Querträger und die Längsträger können folglich ein Gerüst bzw. einen Rahmen bilden, an dem ein oder mehr planartige Abdeckelement lösbar befestigt sind, wobei durch die Querträger und die Längsträger eine Formstabilität des wenigstens einen, am Gestell befestigten Abdeckelements gewährleistet wird.

Es kann erfindungsgemäß vorgesehen sein, dass wenigstens ein Längsträger mittig zwischen zwei Querträgern angeordnet ist. Die Anordnung des Längsträgers kann dabei insbesondere zwei obere Scheitelpunkte oder zwei obere Trägersegmente der Querträger verbinden und die Stabilität des Gestells und der Schutzabdeckung erhöhen.

Zusätzlich oder alternativ dazu kann erfindungsgemäß vorgesehen sein, dass wenigstens zwei Querträger über zwei, beidseitig jeweils im Bereich der unteren Enden der Querträger angeordnete Längsträger verbunden sind. Durch die Längsträger kann auf diese Weise eine Versteifung der Querträger erreicht werden, wodurch sich die Stabilität des Gestells und der Schutzabdeckung erhöht.

Es wird erfindungsgemäss vorgesehen, dass das Abdeckelement an den Querträgern und/oder den Längsträgern über Befestigungsmittel und/oder Spannmittel lösbar befestigt ist. Insbesondere kann das Abdeckelement derart befestigt werden, dass es bei zwei gegenüberliegenden Querträgern und/oder bei zwei gegenüberliegenden Längsträgern an einem Querträger oder Längsträger über Befestigungsmittel lösbar befestigt ist und an dem gegenüberliegenden Querträger bzw. dem gegenüberliegenden Längsträger lösbar über Spannmittel befestigt ist. Über die Spannmittel kann somit eine Zugkraft auf das gegenüberliegend befestigte Abdeckelement ausgeübt werden, so dass das Abdeckelement gestrafft bzw. gespannt wird. Ein Durchhängen des planartigen Abdeckelements und/oder die Bildung von Falten in dem planartigen Abdeckelement kann somit vorteilhaft vermieden werden. Selbstverständlich ist es auch möglich, dass das Abdeckelement über zwei oder mehr an gegenüberliegenden Seiten des Abdeckelements angeordnete Spannmittel gespannt wird oder dass es nicht gespannt wird und nur mit keine Spannkraft erzeugenden Befestigungsmitteln lösbar befestigt ist.

In einer bevorzugten Ausgestaltung der Erfindung kann vorgesehen sein, dass das Abdeckelement an einem der im Bereich der unteren Enden zweier Querträger angeordneten Längsträger mit einem Befestigungsmittel und an dem gegenüberliegenden Längsträger mit einem Spannmittel jeweils lösbar befestigt ist, oder dass das Abdeckelement an beiden Längsträgern jeweils mit einem Befestigungsmittel oder jeweils einem Spannmittel lösbar befestigt ist. Dies ermöglicht vorteilhaft, dass das Abdeckelement in Querrichtung gespannt werden kann. Weiterhin ist ein Entfernen des Abdeckelements durch die Befestigungsmittel und/oder Spannmittel, welche an den im unteren Bereich der Querträger angeordneten Längsträgern angeordnet sind, insbesondere auch bei einer Abdeckung größerer Maschinen, aufgrund deren Zugänglichkeit einfach möglich. Falls ein Spannen in Querrichtung nicht erforderlich oder erwünscht ist, ist es selbstverständlich möglich, dass das planartige Abdeckelement an beiden Längsträgern mittels Befestigungsmittel lösbar befestigt ist. Auch eine lösbare Befestigung mittels Spannmitteln an beiden Längsträgern im Bereich der unteren Enden der Querträger ist selbstverständlich möglich.

Für die Befestigungsmittel und die Spannmittel kann erfindungsgemäß vorgesehen sein, dass ein Befestigungsmittel einen Keder des Abdeckelements oder eine Kederleiste des Gestells oder einen Zapfen oder eine Öse oder eine Aussparung oder eine Lochleiste umfasst und/oder dass ein Spannmittel einen Zapfen und einen Spannring und/oder eine Öse oder eine Aussparung und eine Spannhakenanordnung, umfassend wenigstens einen mit einer Feder verbundenen Haken und/oder wenigstens einen Exzenterspanner, umfasst. Beispielsweise kann das Abdeckelement eine im Wesentlichen rechteckige Form aufweisen, wobei als ein Befestigungsmittel im Bereich einer Kante des Abdeckelements ein Keder vorgesehen ist. Als Gegenstück zu dem Keder kann an dem Gestell als Befestigungsmittel eine Kederleiste zur Aufnahme des Keders des Abdeckelements vorgesehen sein. An einer dem Keder gegenüberliegenden Seite des Abdeckelements können Spannmittel vorgesehen sein, welche ein Spannen des Abdeckelements bei in der Kederleiste aufgenommenem Keder ermöglicht wird. Ein Spannmittel kann dabei einen Zapfen und einen Spannring umfassen, wobei es sowohl möglich ist, dass der Zapfen abdeckelementseitig und der Spannring gestellseitig vorgesehen ist, als auch dass der Spannring abdeckelementseitig und der Zapfen gestellseitig vorgesehen ist. Zusätzlich oder alternativ zu dem Zapfen und dem Spannring können auch eine oder mehrere Ösen bzw. eine oder mehrere Aussparungen und eine Spannhakenanordnung, welche wenigstens einen eine Feder verbundenen Haken, aufweist, verwendet werden.

Als Spannmittel kann auch ein, beispielsweise gestellseitig angeordneter, Exzenterspanner vorgesehen sein, welcher beispielsweise im geöffneten Zustand in eine Öse des Abdeckelements eingehakt werden kann und nach Schließen des Exzenterspanners das Abdeckelement spannt. Bevorzugt befinden sich ein oder mehrere als Exzenterspanner und/oder Spannhakenanordnung ausgeführte Spannmittel dabei am Gestell, wobei jeweils als Gegenstück wirkende Spannmittel in Form von Ösen im Abdeckelement vorgesehen sind. In einer weniger bevorzugten Ausgestaltung der Erfindung ist jedoch auch eine umgekehrte Anordnung, bei der die Ösen gestellseitig vorgesehen sind und die Spannhakenanordnung bzw. der oder die Exzenterspanner abdeckelementseitig angeordnet sind, möglich. Bevorzugt sind wenigstens zwei Spannmittel zum Spannen des Abdeckelements vorgesehen, welche jeweils eine Ecke des Abdeckelements spannen, so dass insgesamt ein straffer und möglichst faltenfreier Sitz des Abdeckelements ermöglicht wird. Selbstverständlich ist es auch möglich, dass mehrere Spannmittel, welche entlang einer oder mehrerer Kanten des Abdeckelements angeordnet sind, vorgesehen sind.

Erfindungsgemäß kann vorgesehen sein, dass das wenigstens eine Abdeckelement einen oder mehrere, in einem Randbereich des Abdeckelements befestigte, insbesondere eingenähte, Magnete und/oder mehrere Druckknöpfe und/oder wenigstens einen Klettverschluss umfasst, mit dem oder denen das Abdeckelement an dem Gestell und/oder an wenigstens einem weiteren Abdeckelement der Schutzabdeckung lösbar befestigt ist. Insbesondere kann vorgesehen sein, dass die Magnete und/oder die Druckknöpfe und/oder der wenigstens eine Klettverschluss umlaufend im gesamten Randbereich des Abdeckelements vorgesehen sind, so dass das Abdeckelement umlaufend an einem oder mehreren Querträgern und/oder Längsträgern des Gestells befestigt werden kann. Gegebenenfalls vorhandene Befestigungsmittel und Spannmittel des Abdeckelements können etwas versetzt vom Randbereich, also weiter zum Inneren des Abdeckelements hin gerichtet, angeordnet sein, so dass sich im Randbereich ein Überlapp des Abdeckelements ergibt, mit welchem das Abdeckelement an den Querträgern und/oder den Längsträgern des Gestells über im Überlapp angeordnete Magnete, Druckknöpfe und/oder wenigstens einen Klettverschluss befestigt werden kann. Insgesamt ermöglicht dies einen dichten Verschluss des Abdeckelements an dem Gestell, so dass eine möglichste dichte Schutzabdeckung erhalten wird, welche das Eindringen und/oder das Austreten von ungewollten Verschmutzungen möglichst vollständig verhindern kann. Sowohl für die Druckknöpfe als auch für den Klettverschluss und die Magnete können gestellseitige Gegenstücke, bzw. Gegenstücke an wenigstens einem weiteren Abdeckelement oder der Maschine oder dem Maschinengestell vorgesehen sein. Bei Magneten kann als Gegenstück insbesondere auch ein magnetisches Material, beispielsweise eines Querträgers und/oder eines Längsträgers, verwendet werden.

Für das Gestell kann erfindungsgemäß vorgesehen sein, dass es wenigstens ein eine Öffnung aufweisendes Plattenelement umfasst, welches wenigstens zwei der Querträger miteinander verbindet und lösbar an diesen befestigt ist, wobei zu den Seiten in Querrichtung jeweils ein planenartiges Abdeckelement lösbar an dem Plattensegment und dem Gestell befestigt ist. Das Plattensegment kann dabei insbesondere an einem oberen Bereich der Querträger und/oder mittig oder im Wesentlichen mittig an einem jeweiligen Umfang der Querträger angeordnet sein. Zu den Seiten in Querrichtung ist dabei jeweils ein planenartiges Abdeckelement lösbar an dem Plattensegment und dem Gestell befestigt. Die Befestigung der Abdeckelemente kann dabei mit Befestigungsmitteln und/oder Spannmitteln, wie vorangehend beschrieben wurde, erfolgen. Dabei kann vorgesehen sein, dass auch das Plattensegment Befestigungsmittel und/oder Spannmittel, insbesondere zu den Befestigungsmitteln oder Spannmitteln der Abdeckelemente korrespondierende Befestigungsmittel und/oder Spannmittel, aufweist. Dies ermöglicht es, dass die Abdeckelemente sowohl an dem Gestell als auch an dem Plattensegment befestigt und/oder gespannt werden können. Neben den Abdeckelementen ist auch das Plattensegment lösbar an dem Gestell befestigt, so dass es beispielsweise zu Reinigungszwecken entfernt werden kann.

Das Plattensegment weist wenigstens eine Öffnung auf, welche dazu dient, Maschinenteile wie Zuführungsrohre, Entgasungsrohre, Kühlwasserleitungen, Kabelstränge oder Ähnliches durch die Schutzabdeckung nach außen zu führen. Die lösbare Befestigung des Plattensegments ermöglicht es, maschinenabhängig und/oder abhängig von einem mit der Maschine durchzuführenden Prozess oder einer Konfiguration der Maschine verschiedene Plattensegmente gemäß den an der Maschine für den Prozess bzw. die Konfiguration angeordneten, aus der Schutzabdeckung herauszuführenden Maschinenteilen zu verwenden.

Erfindungsgemäß kann vorgesehen sein, dass das Abdeckelement oder wenigstens eines der Abdeckelemente wenigstens eine Öffnung aufweist. Auch die wenigstens eine Öffnung in dem Abdeckelement oder dem wenigstens einen Abdeckelement kann dazu verwendet werden, Maschinenteile vom Inneren der Schutzabdeckung nach außen zu führen. Aufgrund der planartigen Beschaffenheit des Abdeckelements besteht die Möglichkeit, dass ein Nacharbeiten des Abdeckelements durch das Hinzufügen weiterer Öffnungen vorteilhaft durchgeführt werden kann. Somit können bereits vorhandene Abdeckelemente auch nach einem Umbau oder einer Veränderung der Maschine bzw. des Abschnitts der Maschine, welche von der Schutzabdeckung abgedeckt werden, weiter verwendet werden.

Erfindungsgemäß kann vorgesehen sein, dass die Öffnung oder die Öffnungen eines oder mehrerer Abdeckelemente jeweils über eine aus einem flexiblen Material bestehende, klappbare Lasche des Abdeckelements abdeckbar sind. Die Lasche kann dabei beispielsweise am Abdeckelement angenäht und/oder angeklebt oder über Verschlüsse abnehmbar an dem Abdeckelement befestigt sein. Bevorzugt besteht die Lasche aus demselben Material wie das Abdeckelement. Durch die Lasche kann die Öffnung, wenn ein Maschinenteil durch die Schutzabdeckung nach außen geführt werden soll, geöffnet werden, indem die Lasche aus einer Schließposition in eine geöffnete Position geklappt wird. Somit kann das Abdeckelement insbesondere bei Maschinen oder Abschnitten von Maschinen, welche für verschiedene Prozesse über die Verwendung verschiedener Maschinenteile konfiguriert werden können, entsprechend den jeweils aus der Schutzabdeckung herauszuführenden Maschinenteilen durch Öffnen bzw. Verschließen der Öffnungen eingerichtet werden.

Weiterhin kann erfindungsgemäß vorgesehen sein, dass im Bereich einer oder mehrerer Öffnungen jeweils eine lösbar befestigte Manschette angeordnet ist. Die Manschette kann dabei lösbar an dem die Öffnung aufweisenden Abdeckelement bzw. an dem die Öffnung aufweisenden Plattensegment befestigt sein. Die Manschette deckt im befestigten Zustand den Randbereich der Öffnung des Abdeckelements bzw. des Plattensegments sowie einen Zwischenraum zu einem aus der Öffnung geführten Maschinenteil ab. Eine Befestigung der Manschette kann beispielsweise mittels Druckknöpfen, eines oder mehrerer Klettverschlüsse und/oder Reißverschlüsse erfolgen. Das Anordnen der Manschette am Randbereich der Öffnung verhindert ein Eindringen und/oder ein Austreten von Verschmutzungen im Bereich der Öffnungen bzw. im Bereich der aus den Öffnungen herausgeführten Maschinenteile.

In einer bevorzugten Ausführungsform der Erfindung kann vorgesehen sein, dass das oder wenigstens eines der Abdeckelemente wenigstens eine Stirnfläche des Gestells abdeckt und/oder dass wenigstens ein weiteres Abdeckelement vorgesehen ist, welches wenigstens eine Stirnfläche des Gestells abdeckt. Das Abdeckelement kann beispielsweise so ausgeführt sein, dass ein Abschnitt des Abdeckelements umgeschlagen werden kann, so dass der umgeschlagene Abschnitt eine Stirnfläche des Gestells abdeckt. Das Abdeckelement bzw. der umgeschlagene Abschnitt des Abdeckelements kann dabei insbesondere an einem randseitigen Querträger des Gestells befestigt werden. Alternativ dazu ist es möglich, dass ein weiteres Abdeckelement vorgesehen ist, welches an einem randseitigen Querträger lösbar befestigt ist, so dass durch das weitere Abdeckelement die Stirnfläche des Gestells abgedeckt wird.

Für das wenigstens eine Abdeckelement kann erfindungsgemäß vorgesehen sein, dass es aus einem flexiblen Werkstoff und/oder einem Textil besteht, insbesondere aus einem mit Polyurethan beschichteten Preox/Para-Aramid-Gewebe, einem Glasfasergewebe oder einem mit Polytetrafluorethylen beschichteten Glasfasergewebe. Die Verwendung eines mit Polyurethan beschichteten Preox/Para-Aramid-Gewebe, einem Glasfasergewebe oder einem mit Polytetrafluorethylen beschichten Glasfasergewebe bietet dabei den Vorteil, dass diese Materialien neben einer hinreichenden Flexibilität für die Bildung des planartigen Abdeckelements auch eine gute Temperaturstabilität aufweisen, so dass die Schutzabdeckung auch bei Maschinen bzw. Abschnitten von Maschinen zum Einsatz kommen können, welche im Betrieb eine signifikante Menge an Abwärme abstrahlen. Weiterhin weisen diese Materialien eine gute mechanische Stabilität sowie eine gute Reinigbarkeit und eine geringe Wärmeleitfähigkeit auf.

Erfindungsgemäß kann vorgesehen sein, dass die im befestigten Zustand der Schutzabdeckung zur Maschine oder dem Abschnitt der Maschine gerichtete Innenseite des wenigstens einen Abdeckelements mit einem reflektierendem Material, insbesondere mit einer reflektierenden Folie, kaschiert ist und/oder dass an der Innenseite des Abdeckelements wenigstens eine Platte aus einem formfesten und/oder magnetischem Material angeordnet ist. Die reflektierenden Eigenschaften des reflektierenden Materials beziehen sich dabei insbesondere auf die von der Maschine erzeugte Wärmestrahlung. Das Anordnen des reflektierenden Materials an der zu der Maschine oder dem Maschinenabschnitt gerichteten Innenseite des Abdeckelements wirkt aufgrund der Reflektion dabei einem Aufheizen des Abdeckelements bzw. der Schutzabdeckung entgegen. Die Temperatur des Abdeckelements bzw. der Schutzabdeckung kann somit reduziert werden, was das Risiko für Verbrennungen bei unbeabsichtigtem Berühren weiter reduziert und somit die Arbeitssicherheit erhöht.

Das Anordnen einer formfesten Platte an der Innenseite der Schutzabdeckung ermöglicht eine abschnittsweise Versteifung des Abdeckelements, so dass es beispielsweise aufgewickelt oder teilweise umgeklappt werden kann. Eine Versteifung oder eine teilweise Versteifung des Abdeckelements kann weiterhin dazu beitragen, dass sowohl das Entfernen als auch das Anordnen eines Abdeckelements an dem Gestell der Schutzabdeckung möglichst einfach vollzogen werden kann. Es ist auch möglich, dass magnetische Platten, insbesondere magnetische Platten mit einer dreieckigen Form, an der Innenseite des Abdeckelements angeordnet werden. Diese ermöglichen ebenfalls ein Hochklappen des Abdeckelements sowie ein bereichsweises Fixieren des Abdeckelements an sich selbst durch die Magnete. Somit können Teile oder Abschnitte des Abdeckelements hochgeklappt werden und in der hochgeklappten Form aufgrund der magnetischen Platten fixiert werden. Ein Zugriff auf die Maschine bzw. den Abschnitt der Maschine wird somit erleichtert, da das Abdeckelement in der hochgeklappten Form ohne Verwendung weiterer Befestigungsmittel arretiert werden kann.

Erfindungsgemäß kann vorgesehen sein, dass wenigstens ein Abdeckelement verschiebbar an wenigstens einem Längsträger und/oder einem Querträger gelagert ist und/oder dass wenigstens ein Abdeckelement klappbar an dem Gestell gehaltert ist und/oder dass wenigstens ein Abdeckelement eine aufklappbare Gaube und/oder ein transparentes Sichtfenster und/oder wenigstens einen an der Außenfläche angeordneten Griff aufweist. Durch eine verschiebbare Lagerung des wenigstens einen Abdeckelements an wenigstens einem Längsträger und/oder wenigstens einem Querträger des Gestells wird es ermöglicht, das Abdeckelement teilweise zur Seite zu schieben, um die durch die Schutzabdeckung abgedeckte Maschine bzw. den Abschnitt der Maschine freizugeben. Beim Verschieben zum Freigeben der Öffnung kann das Abdeckelement beispielsweise nach Art einer Jalousie gerafft werden oder nach Art eines Rollladens auf eine Rolle aufgewickelt werden.

Es ist auch möglich, dass wenigstens ein Abdeckelement klappbar an dem Gestell gehaltert ist, so dass das Abdeckelement zumindest teilweise hochgeklappt werden kann, um die abgedeckte Maschine bzw. den abgedeckten Abschnitt der Maschine freizugeben. Dazu kann zwischen dem Gestell und dem Abdeckelement beispielsweise eine Klappvorrichtung, umfassend ein oder mehrere Scharniere und/oder mehrere Luftfedern, welche das Abdeckelement in der aufgeklappten Form arretieren, vorgesehen sein. Zusätzlich oder alternativ dazu kann ein Abdeckelement wenigstens eine aufklappbare Gaube aufweisen, welche ebenfalls einen Zugriff an die abgedeckte Maschine bzw. den abgedeckten Abschnitt der Maschine ermöglicht. Zusätzlich oder alternativ dazu ist es möglich, dass ein oder mehrere Abdeckelemente jeweils ein oder mehrere transparente Sichtfenster aufweisen, so dass von außen die abgedeckte Maschine bzw. der abgedeckte Abschnitt der Maschine betrachtet werden kann. Insbesondere bei großflächigen Sichtfenstern kann vorgesehen sein, dass auch diese aus einem flexiblen Material bestehen, so dass die Flexibilität des Abdeckelements durch das Sichtfenster nicht beeinträchtigt wird. An der Außenfläche wenigstens eines Abdeckelements kann ein Griff oder können mehrere Griffe vorgesehen sein, welche das Öffnen der Schutzabdeckung durch Verschieben und/oder Klappen des Abdeckelements bzw. die Anordnung des Abdeckelements oder das Entfernen des Abdeckelements vom Gestell erleichtern.

Für eine erfindungsgemäße Maschine ist vorgesehen, dass sie eine erfindungsgemäße Schutzabdeckung umfasst.

Weiterhin kann für die Maschine erfindungsgemäß vorgesehen sein, dass sie ein Extruder und/oder dass der von der Schutzabdeckung umgriffene Abschnitt der Maschine ein Verfahrensteil eines Extruders ist. Insbesondere für die Abdeckung eines Verfahrensteils eines Extruders ist die Verwendung der erfindungsgemäßen Schutzabdeckung vorteilhaft, da das Eindringen von Verschmutzungen in das Verfahrensteil des Extruders verhindert wird. Auch ein unerwünschtes Austreten von in einem Extrusionsprozess eingesetzten Materialien wie Farbpigmenten oder Ähnlichem wird durch die Schutzabdeckung vorteilhaft vermieden. Zusätzlich wird auch bei einem sich im Betrieb erwärmenden Verfahrensteil des Extruders die Arbeitssicherheit hinsichtlich eines Berührschutzes durch die Schutzabdeckung gewährleistet.

Alle vorangehend beschriebenen Ausführungen und Vorteile für die erfindungsgemäße Schutzabdeckung gelten entsprechend auch für die erfindungsgemäße Maschine.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine schematische Seitenansicht einer erfindungsgemäßen Maschine,
- Fig. 2: eine perspektivische Darstellung eines Gestells einer erfindungsgemäßen Schutzabdeckung,
- Fig. 3: eine schematische Seitenansicht eines ersten Ausführungsbeispiels einer erfindungsgemäßen Schutzabdeckung,
- Fig. 4: eine Detailansicht von Befestigungsmitteln,
- Fig. 5: eine perspektivische Darstellung eines zweiten Ausführungsbeispiels einer erfindungsgemäßen Schutzabdeckung,
- Fig. 6: eine perspektivische Darstellung eines dritten Ausführungsbeispiels einer erfindungsgemäßen Schutzabdeckung,
- Fig. 7: eine perspektivische Darstellung eines Plattensegments einer erfindungsgemäßen Schutzabdeckung,
- Fig. 8: eine zweite perspektivische Darstellung eines Plattensegments einer erfindungsgemäßen Schutzabdeckung,
- Fig. 9: eine perspektivische Darstellung eines zweiten Ausführungsbeispiels einer erfindungsgemäßen Maschine ohne Abdeckelemente,
- Fig. 10: eine Detailansicht einer lösbaren Befestigung eines Abdeckelements,
- Fig. 11: eine perspektivische Darstellung des zweiten Ausführungsbeispiels einer erfindungsgemäßen Maschine mit Abdeckelementen,
- Fig. 12: eine perspektivische Darstellung eines dritten Ausführungsbeispiels einer erfindungsgemäßen Maschine,
- Fig. 13: eine perspektivische Darstellung eines vierten Ausführungsbeispiels einer erfindungsgemäßen Schutzabdeckung,
- Fig. 14: eine weitere perspektivische Darstellung des vierten Ausführungsbeispiels einer erfindungsgemäßen Schutzabdeckung, und
- Fig. 15: eine perspektivische Darstellung eines vierten Ausführungsbeispiels einer erfindungsgemäßen Maschine.

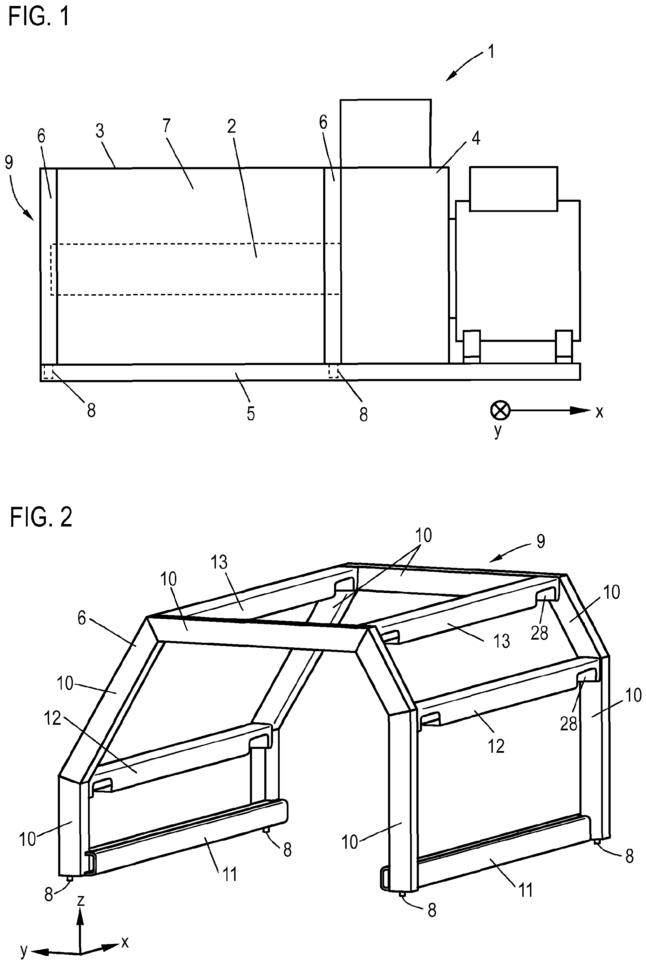

In Fig. 1 ist eine schematische Seitenansicht einer als Extruder ausgebildeten erfindungsgemäßen Maschine 1 dargestellt. Die Maschine 1 umfasst ein Verfahrensteil 2, umfassend einen Arbeitszylinder mit einer oder mehreren darin aufgenommenen Schneckenwellen. Das Verfahrensteil 2 ist von einer erfindungsgemäßen Schutzabdeckung 3 abgedeckt. Da sich das Verfahrensteil 2 hinter der Schutzabdeckung 3 befindet, ist es in Fig. 1 gestrichelt dargestellt. Die Schutzabdeckung 3 deckt folglich einen Abschnitt der Maschine 1 ab. Weiterhin umfasst die Maschine 1 einen Antriebsteil 4, welcher zum Betrieb des Verfahrensteils 2 bzw. zu einem Antrieb der Schneckenwellen dient, sowie ein Maschinengestell 5, auf dem die Maschine 1 und die Schutzabdeckung 3 befestigt sind.

Die Schutzabdeckung 3 umfasst zwei Querträger 6, welche das Verfahrensteil 2 der Maschine 1 in einer Querrichtung, welche in Fig. 1 der sich in Zeichenebene erstreckenden y-Richtung entspricht, umgreifen. Weiterhin umfasst die Schutzabdeckung 3 ein planenartiges Abdeckelement 7, welches zwischen den Querträgern 6 angeordnet ist und sich längs der Querträger in Längsrichtung der Maschine, in Fig. 1 in x-Richtung, erstreckt. Die Querträger 6 umfassen an ihrer Unterseite die gestrichelt dargestellten Befestigungsmittel 8, mit welchen die Querträger 6 an dem Maschinengestell 5 befestigt sind. Bei dem Befestigungsmitteln 8 kann es sich beispielsweise um Bolzen und/oder Schrauben handeln. Die Befestigungsmittel 8 greifen dabei am Maschinengestell 5 in entsprechende Aufnahmen oder Gewinde ein, so dass eine stabile und insbesondere lösbare Befestigung der Schutzabdeckung 3 an der Maschine bzw. dem Maschinengestell ermöglicht wird. Zusätzlich oder alternativ zu der Befestigung an dem Maschinengestell 5 ist auch eine Befestigung an der Maschine 1 möglich. Die beiden Querträger 6 bilden ein Gestell 9, an dem das planenartige Abdeckelement 7 lösbar befestigt ist. Auf die Möglichkeiten zur lösbaren Befestigung des planartigen Abdeckelements 7 an dem Gestell 9 wird nachfolgend noch eingegangen.

In Fig. 2 ist eine perspektivische Ansicht eines Gestells 9 dargestellt. Das Gestell 9 umfasst zwei im Wesentlichen C-förmige Querträger 6. Aufgrund der Öffnung der C-förmigen Querschnitte an der Unterseite des Gestells 9 wird eine Anordnung des Gestells 9 an einer Maschine oder einem Abschnitt einer Maschine derart ermöglicht, dass die Querträger 6 die Maschine bzw. den Abschnitt der Maschine zumindest bereichsweise umgreifen. Jeder Querträger 6 umfasst eine Mehrzahl von Trägersegmenten 10, welche jeweils unter einem Winkel aneinander anschließen und das C-förmige Querschnittsprofil eines Querträgers 6 bilden. Die Querträger 6 erstrecken sich dabei in einer Ebene, hier die yz-Ebene, und sind über sich in Längsrichtung, hier der x-Richtung, erstreckende Längsprofile 11, 12, 13 verbunden. Die Längsprofile 11 sind dabei jeweils im Bereich der unteren Enden der Querträger 6 zwischen den Querträgern 6 angeordnet. Die Längsträger 12 und 13 sind jeweils an den Bereichen, an denen die Trägersegmente 10 aneinander anschließen, an den Querträgern 6 befestigt.

Die beiden Längsträger 13 sind am oberen Ende der Querträger 6 angeordnet und verbinden diese. Anstelle der dargestellten zwei, versetzt von einer Mitte der Querträger 6 angeordneten Längsträger 13 kann auch ein einzelner, insbesondere mittig zwischen den Querträgern 6 angeordneter Längsträger 13 vorgesehen sein. Die Anordnung der Kantensegmente 10 sowie der Längsträger 11 bis 13 ist nicht auf die in Fig. 2 gezeigte Form eingeschränkt, sondern kann entsprechend der von der Schutzabdeckung zu schützenden Maschine bzw. des zu schützenden Abschnitts einer Maschine abhängen, so dass das Gestell 9 und somit die Schutzabdeckung 3 an die jeweilige Maschine angepasst werden kann.

Die Längsträger 11 bis 13 sind an den Querträgern 6 beispielsweise über Verschraubungen befestigt. Um besseren Zugang beispielsweise zu Muttern einer Verschraubung zu erlangen, können die Längsträger 11 bis 13 Aussparungen 28 aufweisen. Neben einer Befestigung über Verschraubungen können die Längsträger 11 bis 13 beispielsweise auch vernietet, verschweißt oder verklebt werden. Sowohl die Querträger 6 als auch die Längsträger 11 bis 13 können aus Metall, beispielsweise aus Stahl oder aus Aluminium, gefertigt sein. Es kann sich um Profilleisten wie beispielsweise Strangpressprofile, Gussprofile oder durch Falten eines Bleches erzeugte Profile handeln. Alternativ ist es möglich, dass die Querträger 6 und die Längsprofile 11 bis 13 aus anderen Materialien wie Holz oder Kunststoff gefertigt sind. Die Befestigung des Gestells 9 an der Maschine 1 bzw. dem Maschinengestell 5 erfolgt über die Befestigungsmittel 8 der Querträger 6. Zusätzlich oder alternativ zu den an den Querträgern 6 angeordneten Befestigungsmitteln 8 können auch an den Längsträgern 11 und/oder weiteren Teilen des Gestells Befestigungsmittel vorgesehen sein.

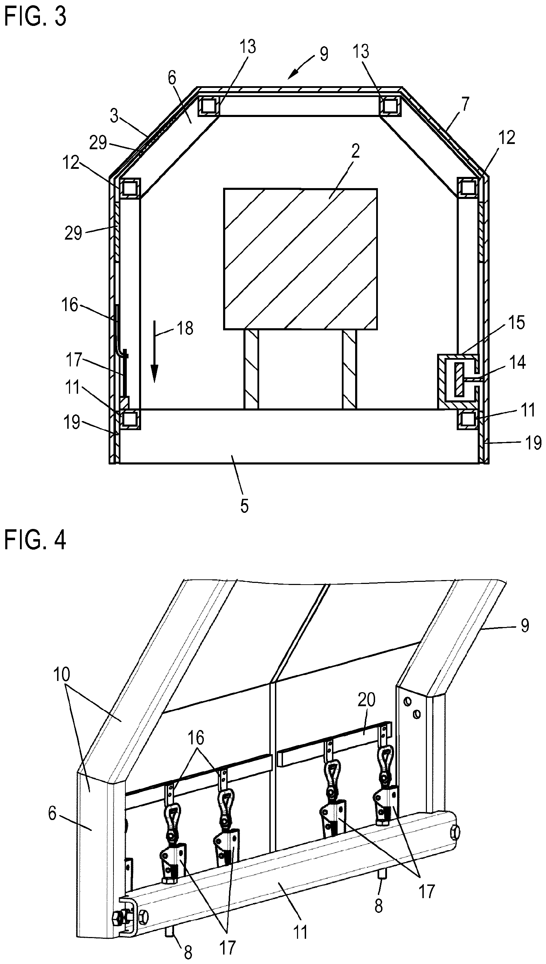

In Fig. 3 ist eine schematische Seitenansicht einer erfindungsgemäßen Schutzabdeckung 3 dargestellt. Die Schutzabdeckung 3 umfasst ein Gestell 9, welches die Längsträger 11 bis 13 umfasst. Die Querträger 6 sind aus Gründen der Übersichtlichkeit in Fig. 3 nicht dargestellt. Das planenartige Abdeckelement 7 ist auf dem Gestell 9 angeordnet und liegt an den Längsträgern 11 bis 13 an. Durch das planenartige Abdeckelement 7 ist das Verfahrensteil 2 eingehaust und wird vor Verschmutzungen geschützt. Weiterhin wird durch das planenartige Abdeckelement 7 ein Berührschutz gebildet. Beim Betrieb der Maschine 1, insbesondere beim Betrieb des Verfahrensteils 2, kann Wärme entstehen bzw. das Verfahrensteil 2 kann während des Extrusionsprozesses zumindest teilweise aufgeheizt werden. Die dadurch entstehende Wärme kann als Wärmestrahlung an ein umgebendes Gehäuse abgestrahlt werden. Das planenartige Abdeckelement 7 beispielsweise aus einem mit Polyurethan beschichteten Preox/Para-Aramid-Gewebe, einem Glasfasergewebe oder einem mit Polytetrafluorethylen beschichteten Glasfasergewebe bestehen. Aufgrund der geringen Wärmeleitfähigkeit dieser für das planenartige Abdeckelement 7 verwendeten textilen Werkstoffe wird das Risiko einer Verbrennung bei unbeabsichtigtem Berühren der Schutzabdeckung 3 reduziert. Die Dicke des Abdeckelements 7 bzw. die Dicke des textilen Materials kann beispielsweise zwischen 0,5 mm und 5 mm betragen, so dass eine ausreichende Flexibilität des planenartigen Abdeckelements 7 vorliegt, um es an dem Gestell 9 befestigen zu können. Eine lösbare Befestigung des planenartigen Abdeckelements 7 an dem Gestell 9 ist in den in Fig. 3 dargestellten Ausführungsbeispielen über die Befestigungsmittel 14, 15 sowie die Spannmittel 16, 17 umgesetzt. Das Befestigungsmittel 14 ist als ein an dem planenartigen Abdeckelement 7 befestigter Keder ausgeführt. Das Gegenstück zu dem Befestigungsmittel 14 bildet das als Kederleiste ausgebildete Befestigungsmittel 15, in welchem das als Keder ausgebildete Befestigungsmittel 14 aufgenommen ist. Die Kederleiste ist dabei an dem Gestell 9 befestigt. Eine Befestigung kann beispielsweise an einem der Längsprofile 11 und/oder an einem oder mehreren der Querprofile 6 erfolgen. An der gegenüberliegenden Seite, also an der in Fig. 3 linken Seite, ist das planenartige Abdeckelement 7 über die Spannmittel 16, 17 lösbar mit dem Gestell 9 verbunden. Das Spannmittel 16 ist dabei als mit dem planenartigen Abdeckelement 7 verbundener Haken ausgeführt, in den das als mit dem Gestell 9 verbundene und als Gummiring ausgeführte Spannmittel 17 eingreift. Durch den Gummiring wirkt eine Kraft, deren Wirkrichtung durch den Pfeil 18 dargestellt ist, auf das planenartige Abdeckelement. Durch die Spannmittel 16, 17 erfolgt folglich ein Spannen der Plane über das Gestell 9, so dass die Plane möglichst fest und möglichst faltenfrei an dem Gestell 9 der Schutzabdeckung 3 angeordnet ist.

An den unteren, randseitigen Enden des planenartigen Abdeckelements 7 sind weiterhin in das planenartige Abdeckelement 7 eingenähte oder angeklebte Magnete 19 eingebracht, welche eine Befestigung des planenartigen Abdeckelements an dem Maschinengestell 5 und/oder den Längsträgern 11 ermöglicht. Das planenartige Abdeckelement 7 umfasst weiterhin Magnete 29, mit denen auch eine Befestigung an den Längsträgern 12, 13 und an den Querträgern 6 möglich ist. Bevorzugt erfolgt eine Befestigung des planenartigen Abdeckelements 7 mittels der Magnete 19, 29 am gesamten umlaufenden Rand des Abdeckelements 7, so dass eine hohe Dichtigkeit der Schutzabdeckung 3 erreicht wird. Die Magnete 19, 29 können beispielsweise aus Ferrit, Neodym-Eisen-Bor und/oder einem anderen permanentmagnetischen Werkstoff bestehen und an das planenartige Abdeckelement 7 angeklebt oder eingenäht sein.

In Fig. 4 ist eine alternative Möglichkeit der lösbaren Befestigung des Abdeckelements 7 an dem Gestell 9 dargestellt. Das planenartige Abdeckelement 7 umfasst eine Leiste 20, an der mehrere als Haken ausgebildete Befestigungsmittel 16 angeordnet sind. Die Haken greifen jeweils im gespannten Zustand in jeweils eine ösenförmige Aufnahme eines als Exzenterspanner ausgebildeten Befestigungsmittels 17 ein. Die Befestigungsmittel 17 sind an dem dargestellten Längsträger 11 befestigt. Zum Entfernen des planartigen Abdeckelements 7 können die Exzenterspanner aufgeschwenkt und geöffnet werden, wodurch die Zugbelastung des Abdeckelements 7 unterbrochen wird und die Haken aus den Exzenterspannern herausgenommen werden können. Anschließend kann das planenartige Abdeckelement 7 abgenommen werden und unter lösen der an der gegenüberliegenden Seite vorgesehenen Befestigungsmittel 14, 15 vom Gestell 9 entfernt werden. Ein Entfernen des planenartigen Abdeckelements 7 ist beispielsweise zu Reinigungszwecken erforderlich. Die lösbare Befestigung des planenartigen Abdeckelements 7 an dem Gestell 9 ermöglicht ein schnelles Abmontieren des Abdeckelements 7 und/oder dessen schnellen Austausch durch ein bereits gesäubertes Abdeckelement. In dem in Fig. 4 gezeigten Ausführungsbeispiel sind die Befestigungsmittel 16, 17 an der Innenseite der Schutzabdeckung 3 angeordnet. Selbstverständlich ist es auch möglich, dass die Befestigungsmittel 16, 17 an der Außenseite der Schutzabdeckung 3 angeordnet sind. Zur Befestigung des Gestells 9 an einer Maschine oder einem Maschinengestell weisen die Längsträger 11 des Gestells 9 die als Schrauben ausgeführten Befestigungsmittel 8 auf.

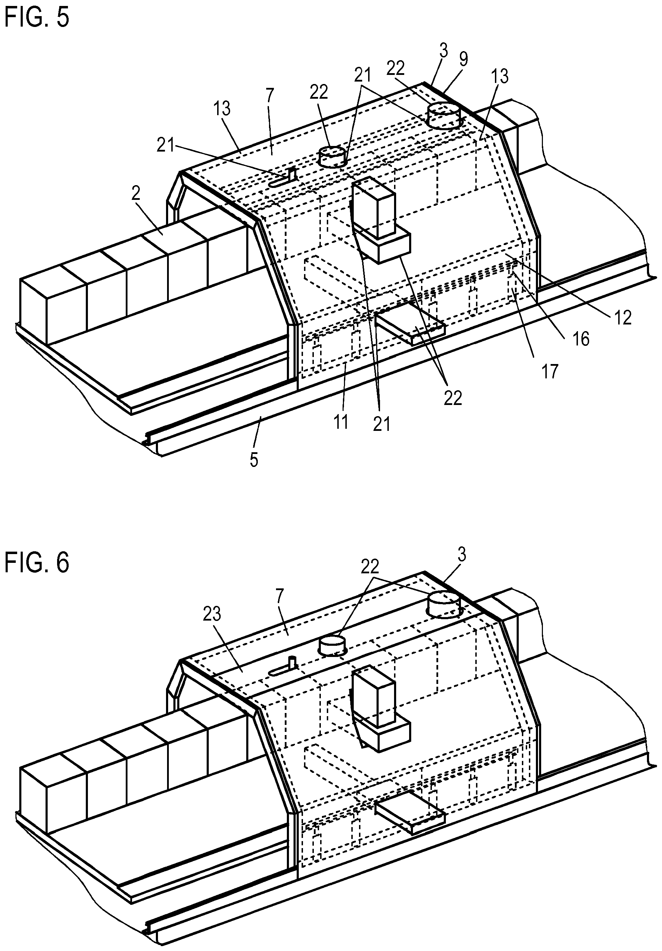

In Fig. 5 ist eine perspektivische Darstellung des ersten Ausführungsbeispiels einer erfindungsgemäßen Schutzabdeckung 3 dargestellt. Ersichtlich deckt die Schutzabdeckung 3 einen Abschnitt des gezeigten Verfahrensteils 2 einer als Extruder ausgebildeten Maschine 1 um. Wie bereits vorangehend beschrieben wurde, umfasst die Schutzabdeckung 3 ein Gestell 9, welches an dem Maschinengestell 5 befestigt ist. Der Übersichtlichkeit halber sind die hinter dem planenartigen Abdeckelement angeordneten Strukturen gestrichelt dargestellt, so dass die Längsprofile 11 bis 13 sowie die in diesem Ausführungsbeispiel innenliegend angebrachten Spannmittel 16, 17 erkennbar sind. An der hier nicht dargestellten, in Querrichtung (y-Richtung) hinten liegenden Seite der Schutzabdeckung 3 kann das planenartige Abdeckelement 7 beispielsweise, wie vorangehend zu Fig. 3 beschrieben wurde, mittels eines Keders und einer Kederleiste befestigt sein. Alternativ ist auch an der gegenüberliegenden Seite eine Befestigung über Spannmittel 16, 17 möglich, so dass das planenartige Abdeckelement 7 von beiden Seiten gespannt wird.

Das in Fig. 5 dargestellte planenartige Abdeckelement 7 umfasst mehrere Öffnungen 21, welche dazu dienen, verschiedene Maschinenteile 22 aus dem von der Schutzabdeckung 3 umschlossenen Inneren nach außen zu führen. Bei den Maschinenteilen 22 kann es sich beispielsweise um Entgasungsrohre, Rohre zur Zufuhr bzw. Abfuhr von Kühlflüssigkeit, Seitenbeschicker für das Verfahrensteil 2, elektrische Kabelstränge oder Ähnliches handeln, welche mit außerhalb der Schutzabdeckung 3 angeordneten Einrichtungen zu verbinden sind und/oder über welche beispielsweise Materialien an das Verfahrensteil 2 zugeführt werden können. Die in dem Abdeckelement 7 vorgesehenen Öffnungen 21 ermöglichen ein Herausführen der Maschinenteile 22 aus dem von der Schutzabdeckung 3 umschlossenen Inneren. Es ist möglich, dass das Abdeckelement 7 eine oder mehrere Laschen (hier nicht dargestellt) umfasst, welche die Öffnungen 21 verschließen können, falls an der Stelle kein Maschinenteil 22 nach außen geführt werden soll. Dies ermöglicht es, dass die Schutzabdeckung 3 auch bei verschiedenen Konfigurationen der abgedeckten Maschine bzw. des abgedeckten Abschnitts der Maschine eingesetzt und dichtgehalten werden kann. Es ist möglich, dass das Gestell 9 weitere Querträger 6 und/oder weitere Längsträger umfasst, über welche das planenartige Abdeckelement 7 und/oder weitere planenartige Abdeckelemente gespannt werden.

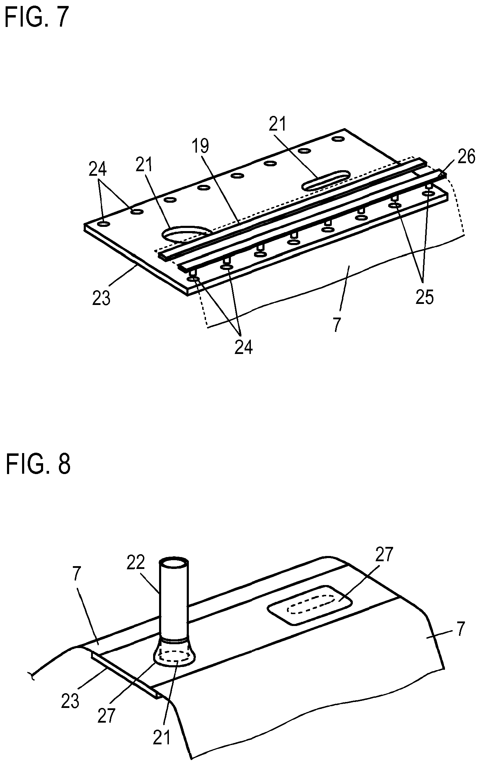

In Fig. 6 ist eine perspektivische Darstellung eines zweiten Ausführungsbeispiels einer erfindungsgemäßen Schutzabdeckung 3 dargestellt. Das zweite Ausführungsbeispiel unterscheidet sich von dem vorangehend beschriebenen, ersten Ausführungsbeispiel dadurch, dass das Gestell 9 ein mittig angeordnetes Plattensegment 23 mit mehreren Öffnungen 21 sowie zwei seitlich dazu angeordnete planenartige Abdeckelemente 7 umfasst. Die beiden planenartigen Abdeckelemente 7 sind jeweils an dem jeweils die unteren Enden der Querträger 6 verbindenden Längsprofil 11 über die Spannmittel 16, 17 lösbar befestigt. An der Oberseite erfolgt eine lösbare Befestigung der planenartigen Abdeckelemente 7 an dem Plattensegment 13. Ein Beispiel für entsprechende Befestigungsmittel zur Befestigung des planenartigen Abdeckelements 7 an dem Plattensegment 23 ist in Fig. 7 dargestellt.

Fig. 7 zeigt eine Detailansicht des Plattensegments 23 sowie eines, hier der Übersichtlichkeit halber gestrichelt dargestellten, planenartigen Abdeckelements 7. Neben den Öffnungen 21, welche dem Durchführen von Maschinenteilen 22, sowie es in Fig. 6 dargestellt ist, dienen, umfasst das Plattensegment 23 mehrere als Aussparungen ausgebildete Befestigungsmittel 24, in die als Zapfen ausgebildete Befestigungsmittel 25 des Abdeckelements 7 eingreifen. Die als Zapfen ausgebildeten Befestigungsmittel 25 können beispielsweise an einer gemeinsamen Leiste 26 des Abdeckelements 7 angeordnet sein, wobei die Leiste 26 an das Abdeckelement 7 angeklebt und/oder derart eingenäht ist, dass die Zapfen zur Befestigung an dem Plattensegment 23 hervorstehen. Die Aussparungen können beispielsweise als Bohrungen oder Löcher in dem Plattensegment 23 ausgeführt sein.

Weiterhin umfasst das dargestellte planenartige Abdeckelement 7 in seinem randseitigen Bereich wenigstens einen Magneten 19, mit dem das Abdeckelement 7 zusätzlich an dem Plattensegment 23 befestigt werden kann. Die Befestigungsmittel 24, 25, also die in die Aussparungen eingreifenden Zapfen, dienen dazu, ein Spannen des Abdeckelements 7 über die an der Unterseite der Schutzabdeckung 3 vorgesehenen Spannmittel 16, 17 zu ermöglichen. Die Befestigung des Abdeckelements 7 mit den Magneten 19 an dem Plattensegment 23 dient insbesondere dazu, einen dichten Verschluss bzw. ein dichtes Anliegen des Abdeckelements 7 an dem Plattensegment 23 zu erreichen. Selbstverständlich kann gegenüber des dargestellten Abdeckelements 7 ein weiteres Abdeckelement 7 angeordnet werden, welches in Fig. 7 lediglich aus Gründen der Übersichtlichkeit nicht dargestellt ist.

Die Verwendung eines oder mehrerer Plattensegmenten 23 bietet die Möglichkeit, die Schutzabdeckung 3 an verschiedene Ausführungen bzw. Modifikationen einer abgedeckten Maschine bzw. eines abgedeckten Abschnitts einer Maschine anzupassen. Die Plattensegmente 23 können beispielsweise als Metallblech ausgeführt sein und verschieden große bzw. verschieden viele Öffnungen 21 umfassen, so dass entsprechend der aktuell abzudeckenden Maschinenkonfiguration eine Durchführung von Maschinenteilen ermöglicht wird. Um ein Wechsel des Plattensegments 23 vornehmen zu können, ist auch dieses lösbar an dem Gestell 9, beispielsweise über eine Verschraubung oder Ähnliches, befestigt.

In Fig. 8 ist ein auf einer Maschine angeordnetes Plattensegment 23 mit an den Seiten jeweils, wie vorangehend zu Fig. 7 beschrieben wurde, befestigten Abdeckelementen 7 dargestellt. Aus der vorderen dargestellten Öffnung 21 ist ein Maschinenteil 22, hier ein Rohr, nach außen geführt. Um das Eindringen von Schmutz in den Randbereich der Öffnung 21 zu verhindern, ist eine Manschette 27 vorgesehen, welche randseitig an der Öffnung 21 (hier gestrichelt dargestellt), angeordnet ist und ein Eindringen von Schmutz zwischen dem Maschinenteil 22 und dem Plattensegment 23 verhindert. Die Manschette 27 ist dabei lösbar an dem Plattensegment, beispielsweise über Druckknöpfe, Magnete, Klett- oder Reißverschlüsse oder Ähnliches befestigt. Entsprechend können auch bei den Öffnungen 21 in den planenartigen Abdeckelementen 7 derartige Manschetten 27 vorgesehen sein und dort durchgeführte Maschinenteile 22 umschließen. Die hintere Öffnung 21, welche in diesem Beispiel nicht verwendet wird, ist über eine Abdeckung 27, welche ebenfalls lösbar an dem Plattensegment 23 befestigt ist, abgedeckt. Die Abdeckung 27 kann aus Metallblech oder aus demselben Material wie das Abdeckelement 7 bestehen. Selbstverständlich können, insbesondere aus demselben Material wie das Abdeckelement 7 bestehende Abdeckungen 27 auch den dem Abdeckelement angeklebt und/oder angenäht sein, um in dem Abdeckelement 7 vorgesehene Öffnungen 21 zu verschließen.

Selbstverständlich ist es bei den gezeigten Ausführungsbeispielen möglich, dass die Schutzabdeckung 3 weitere Querträger 6, welche insbesondere in Längsrichtung beabstandet zu den dargestellten Querträgern 6 angeordnet sind, umfasst, so dass die Schutzabdeckung quasi segmentiert ist und beliebig verlängert werden kann. Ebenso können weitere Abdeckelemente 7 vorgesehen sein, welche zwischen den und den weiteren Querträgern 6 angeordnet sind. Ein dichter Verschluss zwischen zwei Abdeckelementen 7 kann beispielsweise über randseitig an den Abdeckelementen 7 vorgesehene Magnete 19 erfolgen, wobei in einem Überlappbereich der Abdeckelemente 7 eine Befestigung der Abdeckelemente 7 aneinander über die Magnete erfolgen kann. Zusätzlich oder alternativ zu den Magneten können auch Reißverschlüsse, Klettverschlüsse oder Druckknöpfe vorgesehen sein.

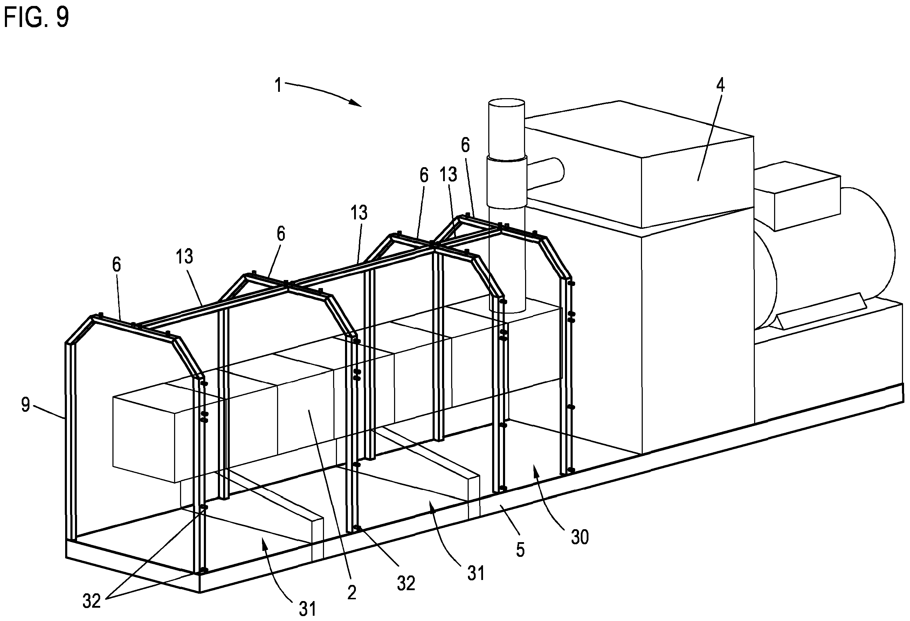

In Fig. 9 ist ein zweites Ausführungsbeispiel einer erfindungsgemäßen Maschine 1 mit einem Gestells 9 dargestellt, welches mehrere in Längsrichtung voneinander beabstandete Querträger 6 aufweist. Zwischen jeweils zwei Querträgern 6 ist jeweils ein Längsträger 13 mittig angeordnet. Die beiden näher an dem Antriebsteil 4 angeordneten Querträger 6 bilden ein Segment 30, wobei die Querträger 6 näher zueinander angeordnet sind als die entsprechend aus den weiteren Querträgern 6 gebildeten Segmente 31. Die zwischen zwei Segmenten 30 bzw. 31 angeordneten Querträger 6 können bei dieser Betrachtung beiden Segmenten zugeordnet werden. Zum Schutz des Verfahrensteils 2 kann an dem Gestell 9 ein einziges Abdeckelement 7 vorgesehen, welches die drei Segmente 30, 31 abdeckt. Es ist auch möglich, dass mehrere Abdeckelemente 7 vorgesehen sind, wobei insbesondere ein oder mehrere Abdeckelemente 7 zum Abdecken des Segments 30 sowie jeweils ein oder mehrere Abdeckelemente 7 zum Abdecken der Segmente 31 vorgesehen sein können. Zur lösbaren Befestigung der Abdeckelemente 7 weisen die Querträger 6 als Zapfen ausgebildete Befestigungsmittel 32 auf. Die Zapfen können beispielsweise an die Querträger 6 angeschweißt sein oder als hervorstehende Bolzen und/oder Schrauben ausgebildet sein.

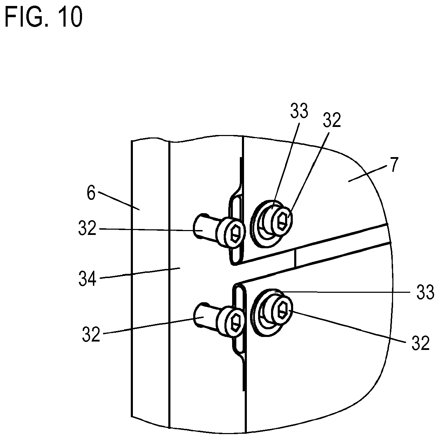

In Fig. 10 ist eine Detailansicht der Befestigung mehrerer Abdeckelemente 7 an einem Querträger 6 mit als Zapfen ausgebildeten Befestigungsmittel 32 dargestellt. Der Querträger 6 umfasst mehrere als Zapfen ausgebildete Befestigungsmittel 32, welche in Längsrichtung und/oder in Querrichtung voneinander beabstandet sind, so dass mehrere planenartige Abdeckelemente 7 an dem Querträger 6 lösbar befestigt werden können. Zur lösbaren Befestigung weisen die Abdeckelemente 7 jeweils ein als Öse ausgebildetes Befestigungsmittel 33 auf, mit welchem sie an einem der Zapfen 32 eingehängt werden können. Die Befestigungsmittel 33 sind im Bereich der Ecken der hier rechteckigen planenartigen Abdeckelemente 7 angeordnet. Zur Versteifung der in Längsrichtung verlaufenden Kanten der planartigen Abdeckelemente 7 ist randseitig jeweils eine Leiste 34 eingenäht, welche von den als Ösen ausgebildeten Befestigungsmitteln 33 durchbrochen wird. Alternativ zu einem Einnähen der Leiste 34 kann auch eine Befestigung mittels Verklebung erfolgen. Über die Zapfen können in Längsrichtung mehrere planartige Abdeckelemente 7 nebeneinander angeordnet werden, z. B. indem an den in Fig. 10 linken Zapfen weitere Abdeckelemente zur Abdeckung eines benachbarten Segments eingehängt werden. Auch in Querrichtung können entlang der Querträger 6 aneinander anschließende Abdeckelemente 7 an den Zapfen lösbar befestigt werden. Insbesondere kann vorgesehen sein, dass die Zapfen an ihrem äußeren Ende einen Kopf aufweisen, so dass ein unbeabsichtigtes Abrutschen eines an den Zapfen befestigten Abdeckelements vermieden werden kann.

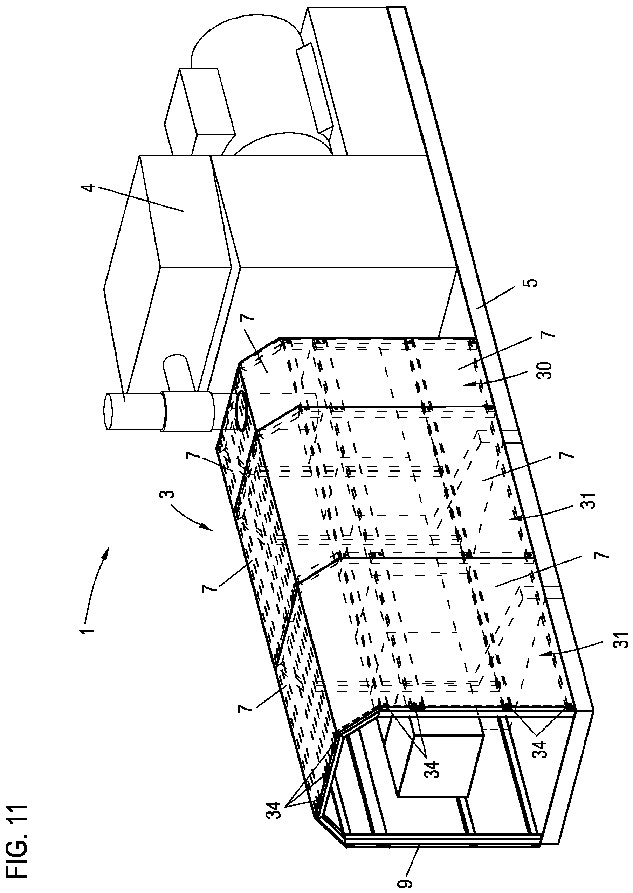

In Fig. 11 ist das Gestell entsprechend Fig. 9 dargestellt, auf dem mehrere planenartige Abdeckelemente 7 angeordnet sind. In jedem der Segmente 30, 31 sind jeweils in Umfangsrichtung vier planenartige Abdeckelemente 7 angeordnet, so dass der komplette, C-förmige Umfang des Gestells 9 durch die Abdeckelemente 7 abgedeckt ist. Um das textile Material der planenanrtigen Abdeckelemente 7 horizontal straff zu halten und um das Entnehmen und das Befestigen der planenartigen Abdeckelemente 7 zu erleichtern, umfassen die Abdeckelemente 7 jeweils mehrere Leisten 34. Die Leisten 34 können beispielsweise im Randbereich der Abdeckelemente 7 entsprechend der Darstellung in Fig. 10 von als Ösen ausgebildeten Befestigungsmitteln 33 durchbrochen werden, wobei die Ösen zur lösbaren Befestigung der Abdeckelemente 7 an den als Zapfen ausgebildeten Befestigungsmitteln 32 der Querträger 6 dienen. Zusätzlich oder alternativ zu den randseitigen Leisten 34 können auch weitere Leisten 34 und/oder ein oder mehrere Platten aus formfestem Material in die Abdeckelemente 7 eingenäht oder an ihnen angeklebt sein, um die Abdeckelemente 7 jeweils bereichsweise zu versteifen.

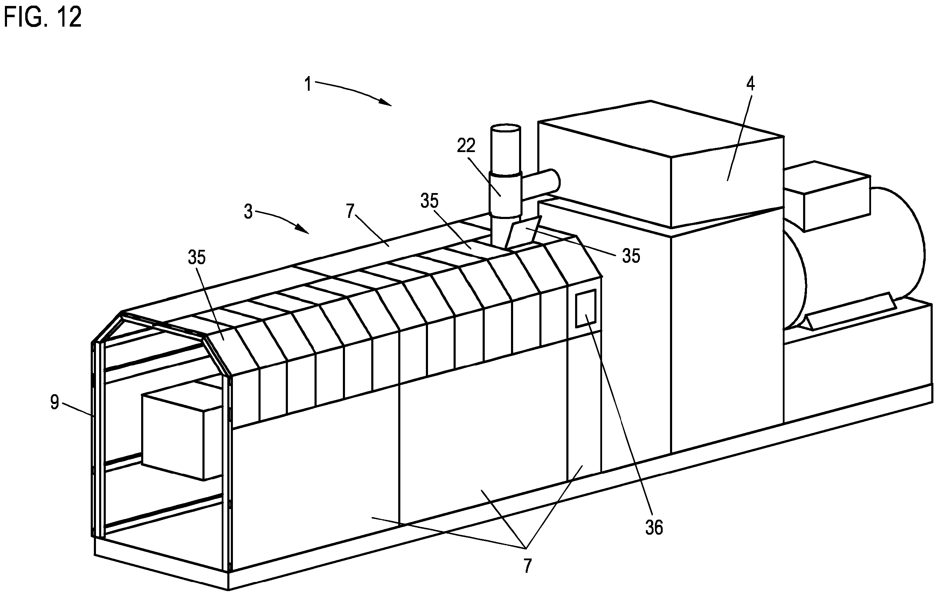

In Fig. 12 ist ein drittes Ausführungsbeispiel einer erfindungsgemäßen Schutzabdeckung 3 dargestellt. Die Schutzabdeckung 3 umfasst dabei mehrere, in Längsrichtung nebeneinander angeordnete planenartige Abdeckelemente 35, welche kleiner sind als die Abdeckelemente 7. Die Abdeckelemente 35 können beispielsweise an den Längsträgern 11, 12, 13 oder an den jeweils angrenzenden, planenartigen Abdeckelementen 7 lösbar befestigt sein, so dass sie ganz oder teilweise ausgeklappt werden können, um beispielsweise ein Maschinenteil 22 durch die Schutzabdeckung 3 zu führen. Eine Befestigung an den Längsträgern 11, 12, 13 ist beispielsweise wie vorangehend beschrieben über Magnete, über Zapfen und Ösen und/oder über weitere Befestigungsmittel möglich. Zusätzlich oder alternativ dazu können die Abdeckelemente 35 an angrenzenden Abdeckelementen 7, 35 über Magnete, Reißverschlüsse, Klettverschlüsse oder Ähnliches lösbar befestigt sein. Eines der planenartigen Abdeckelemente 7 umfasst in diesem Ausführungsbeispiel ein transparentes Sichtfenster 36, über welches beispielsweise der von der Schutzabdeckung 3 abgedeckte Maschinenabschnitt betrachtet werden kann.

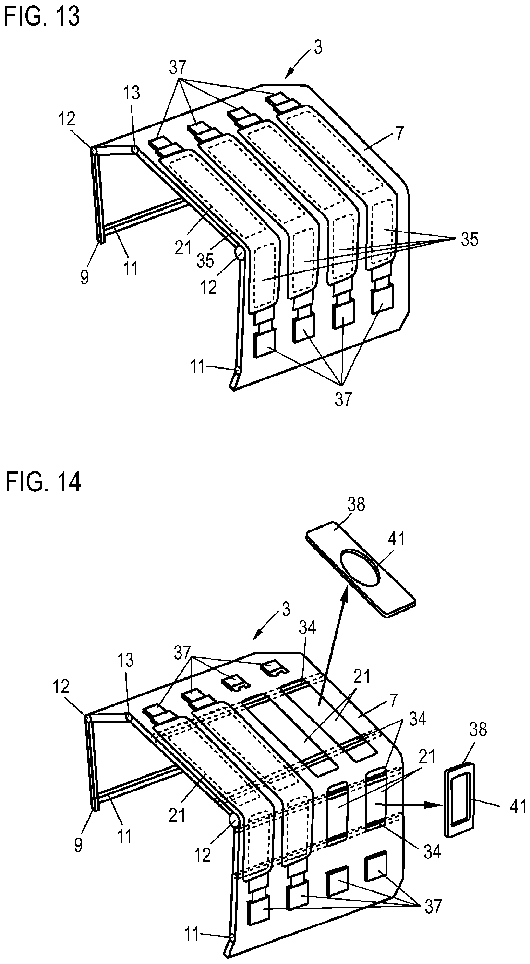

In Fig. 13 ist ein drittes Ausführungsbeispiel einer erfindungsgemäßen Schutzabdeckung 3 dargestellt. Die Schutzabdeckung 3 umfasst mehrere Laschen 35, welche jeweils eine Öffnung 21 des planenartigen Abdeckelements 7 verschließen. Die Laschen können insbesondere aus demselben Material wie das planenartige Abdeckelement 7 gefertigt sein und sind an dem planenartigen Abdeckelement 7 über Befestigungsmittel 37 lösbar befestigt. Die Befestigungsmittel 37 können beispielsweise Steckverschlüsse, Schnallen, Koppelschlösser oder Ähnliches sein. Wie in Fig. 14 dargestellt ist, können die Laschen 35 abgenommen werden, so dass die darunter liegenden Öffnungen 21 des planenartigen Abdeckelements 7 freigegeben werden. Nach Entfernen der Laschen 35 können beispielsweise verschiedene Abdeckplatten 38 angeordnet werden. Die Abdeckplatten 38 können jeweils eine oder mehrere Öffnungen 41 umfassen, welche an die Form von durch die Schutzabdeckung 3 zu führenden Maschinenteilen 22 angepasst sein können. Eine Befestigung der Abdeckplatten 38 kann beispielsweise an den Längsträgern 11, 12, 13 oder an Leisten 34 des planenartigen Abdeckelements 7 erfolgen. Die Leisten 34 können insbesondere derart an dem Abdeckelement 7 angeordnet sein, dass diese nach dem Öffnen der Laschen 35 teilweise freiliegen, so dass die Abdeckelemente 38, beispielsweise über Magnete, an den Leisten 34 fixiert werden können. Durch die Abdeckplatten 38 werden die Öffnungen 21 des planenartigen Abdeckelements 7 verschlossen, wobei jeweils nur der Bereich der Öffnungen 41 der Abdeckplatten 18 offen bleibt. Die Anzahl und die Form der Öffnungen 41 in den Abdeckplatten 38 kann sich dabei nach der Konfiguration bzw. der abgedeckten Maschine des abgedeckten Abschnitts der Maschine richten, so dass hervorstehende Maschinenteile 22 durch die Schutzabdeckung 3 durchgeführt werden können. Selbstverständlich ist auch an den Öffnungen 41 der Abdeckplatten 38 die Anordnung von Manschetten 27 entsprechend Fig. 8 möglich.

In den Bereichen, in denen die Anordnung einer Abdeckplatte 38 nicht erforderlich ist, da kein Maschinenteil 22 an dieser Stelle durch die Schutzabdeckung 3 geführt werden soll, kann die Öffnung 21 des planenartigen Abdeckelements 7 durch die jeweils eine Lasche 35 abgedeckt werden. Das Vorsehen der Laschen 35 ermöglicht es, die Schutzabdeckung 3 flexibel an eine aktuelle Konfiguration der abzudeckenden Maschine 1 bzw. des abzudeckenden Abschnitts der Maschine 1 anzupassen. Alternativ zu einer komplett lösbaren Befestigung können die Laschen 35 auch bereichsweise fest mit dem Abdeckelement 7 verbunden und/oder als aufklappbare Gauben ausgeführt sein.

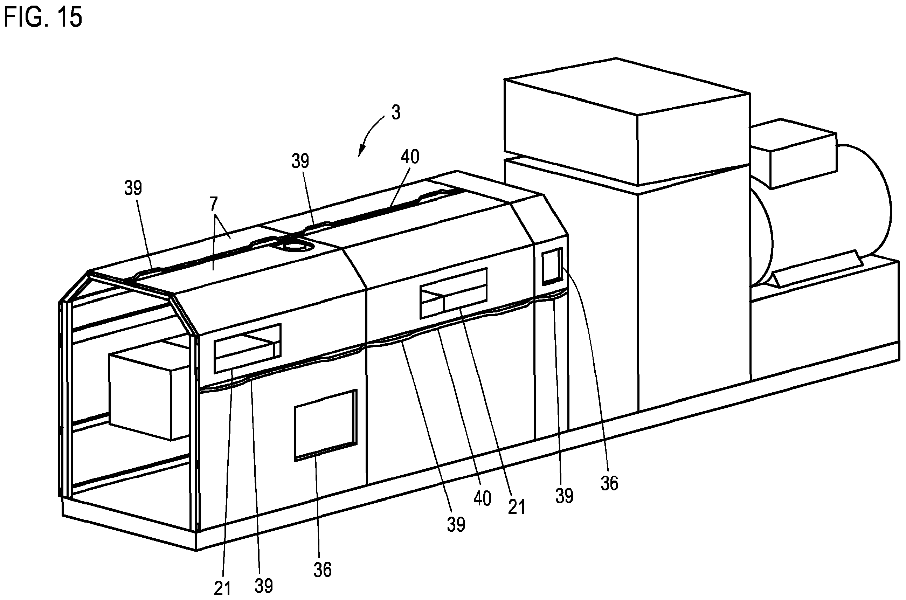

In Fig. 15 ist eine erfindungsgemäße Schutzabdeckung 3 dargestellt, bei der an der Außenseite der planenartigen Abdeckelemente 7 mehrere Griffe 39 angeordnet sind. Die Griffe 39 werden hier beispielsweise durch an der Außenseite der planenartigen Abdeckelemente 7 aufgenähte Gurtbänder 40 gebildet. Durch das Vorsehen der Griffe 39 wird die Handhabung der planenartigen Abdeckelemente 7, insbesondere ihr Entfernen bzw. ihr lösbares Befestigen an dem Gestell 9 der Schutzabdeckung 3, erleichtert. Auch ein Transport der planenartigen Abdeckelemente 7 nach dem Abnehmen und/oder ihre Reinigung können durch die Griffe 39 erleichtert werden. Alternativ zu der Bildung der Griffe 39 durch das aufgenähte Gurtband 40 können auch separate, aus einzelnen Gurtbändern oder aus Kunststoff bestehende Griffe an der Außenseite der Abdeckelemente angenäht oder angeklebt sein. Die Griffe 39 können beispielsweise an den in Längsrichtung verlaufenden Kanten der Abdeckelemente 7 randseitig angeordnet sein. Zusätzlich oder alternativ dazu können auch Griffe 39 vorgesehen sein, welche an anderen Stellen der planenartigen Abdeckelemente 7 angeordnet sind. Zusätzlich zu den Griffen 39 umfassen die Abdeckelemente 7 zum Teil noch eine Öffnung 21, welche dem Durchführen von Maschinenteilen 22 dient, sowie gegebenenfalls ein aus einem transparenten Material bestehendes Sichtfenster 36.

Die in den vorangehenden Ausführungsbeispielen beschriebenen Abdeckelemente 7, 35 können beispielsweise an der Innenseite mit einem reflektierenden Material zur Reflektion von Wärmestrahlung kaschiert sein. Weiterhin ist es möglich, dass die Abdeckelemente 7 wenigstens eine z. B. eingenähte oder angeklebte Platte aus einem formfesten Material umfassen, wodurch das Abdeckelement 7 bereichsweise versteift werden kann. Es kann auch vorgesehen sein, dass das Abdeckelement 7 mehrere leistenförmige Platten umfasst, welche sich in Längsrichtung erstrecken und in Querrichtung zueinander beabstandet sind, so dass das Abdeckelement 7 nach Art eines Rollladens aufgerollt oder aufgeklappt werden kann. Zusätzlich oder alternativ können an der Innenseite Magnete vorgesehen sein, welche die Schutzabdeckung in einer aufgeklappten Position fixieren können.

Die planenartigen Abdeckelemente 7, 35 können aus einem mit Polyurethan beschichteten Preox/Para-Aramid-Gewebe, einem Glasfasergewebe oder einem mit Polytetrafluorethylen beschichteten Glasfasergewebe bestehen und die Dicke der Abdeckelemente 7, 35 bzw. die Dicke des textilen Materials kann beispielsweise zwischen 0,5 mm und 5 mm betragen. Dies gilt für alle beschriebenen Ausführungsformen.

Um einen Zugang zu dem von der Schutzabdeckung 3 abgedeckten Inneren zu erreichen, kann das wenigstens eine Abdeckelement 7 verschiebbar an einem oder mehreren Querträgern 6 und/oder an einem oder mehreren der Längsträger 11 bis 13 angeordnet sein, so dass das Abdeckelement 7 in Querrichtung oder in Längsrichtung aufgeschoben werden kann, um die darunter liegende Maschine oder den darunter liegenden Abschnitt der Maschine freizugeben. Die Abdeckelemente 7 können weiterhin aufklappbare Gauben und/oder aus einem transparenten Material bestehende Sichtfenster und/oder an der Außenseite angeordnete Griffe zur Erleichterung des Montierens bzw. des Abnehmens des Abdeckelements 7 aufweisen.

## Patentansprüche

1. Schutzabdeckung für eine Maschine (1) oder einen Abschnitt einer Maschine (1), wobei die Schutzabdeckung (3) ein Gestell (9) mit Befestigungselementen (8), über die das Gestell (9) an einer Maschine (1) oder an einem die Maschine halternden Maschinengestell (5) befestigbar ist, aufweist, wobei das Gestell (9) mehrere im befestigten Zustand des Gestells (9) die Maschine (1) oder den Abschnitt der Maschine (1) zumindest bereichsweise umgreifende Querträger (6) aufweist und an dem Gestell (9) wenigstens ein planenartiges, sich zwischen den Querträgern (6) und zumindest abschnittsweise längs der Querträger (6) erstreckendes Abdeckelement (7) lösbar befestigt ist, wobei das Abdeckelement (7) an den Querträgern (6) und/oder den Längsträgern (11, 12, 13) über Spannmittel (16, 17) oder über Befestigungsmittel (14, 15, 24, 25) und Spannmittel (16, 17) lösbar befestigt ist.

2. Schutzabdeckung nach Anspruch 1,
**dadurch gekennzeichnet,**
**dass** sich die Querträger (6) jeweils in einer Ebene erstrecken, wobei ein Querträger (6) jeweils aus mehreren Trägersegmenten (10) besteht, welche in der Ebene des Querträgers (6) angeordnet sind und jeweils unter einem Winkel aneinander anschließen.

3. Schutzabdeckung nach Anspruch 1 oder 2,
**dadurch gekennzeichnet,**
**dass** das Gestell (9) ein oder mehrere Längsträger (11, 12, 13) umfasst, welche die Querträger (6) miteinander verbinden.

4. Schutzabdeckung nach Anspruch 3,
**dadurch gekennzeichnet,**
**dass** wenigstens ein Längsträger (11, 12, 13) mittig zwischen zwei Querträgern (6) angeordnet ist.

5. Schutzabdeckung nach Anspruch 3 oder 4,
**dadurch gekennzeichnet,**
**dass** wenigstens zwei Querträger (6) über zwei, beidseitig jeweils im Bereich der unteren Enden der Querträger (6) angeordnete Längsträger (11, 12, 13) verbunden sind.

6. Schutzabdeckung nach Anspruch 5,
**dadurch gekennzeichnet,**
**dass** das Abdeckelement (7) an einem der im Bereich der unteren Enden zweier Querträger (6) angeordneten Längsträger (11) mit einem Befestigungsmittel (14, 15, 24, 25) und an dem gegenüberliegenden Längsträger (11) mit einem Spannmittel (16, 17) jeweils lösbar befestigt ist, oder dass das Abdeckelement (7) an beiden Längsträgern (11) jeweils mit einem Befestigungsmittel(14, 15, 24, 25) oder jeweils einem Spannmittel (16, 17) lösbar befestigt ist.

7. Schutzabdeckung nach Anspruch 5,
**dadurch gekennzeichnet,**
**dass** ein Befestigungsmittel (14, 15, 24, 25) einen Keder des Abdeckelements oder eine Kederleiste des Gestells oder einen Zapfen oder eine Öse oder eine Aussparung oder eine Lochleiste umfasst und/oder dass ein Spannmittel (16, 17) einen Zapfen und einen Spannring und/oder eine Öse oder eine Aussparung und eine Spannhakenanordnung, umfassend wenigstens einen mit einer Feder verbundenen Haken und/oder wenigstens einen Exzenterspanner, umfasst.

8. Schutzabdeckung nach einem der vorangehenden Ansprüche,
**dadurch gekennzeichnet,**
**dass** das wenigstens eine Abdeckelement (7) einen oder mehrere, in einem Randbereich des Abdeckelements (7) befestigte, insbesondere eingenähte, Magnete (19) und/oder mehrere Druckknöpfe und/oder wenigstens einen Klettverschluss umfasst, an mit dem oder denen das Abdeckelement (7) an dem Gestell (9) und/oder wenigstens einem weiteren Abdeckelement (7) der Schutzabdeckung (3) und/oder an der Maschine (1) und/oder an dem Maschinengestell (5) lösbar befestigt ist.

9. Schutzabdeckung nach einem der vorangehenden Ansprüche,
**dadurch gekennzeichnet,**
**dass** das Gestell (9) wenigstens ein wenigstens eine Öffnung (21) aufweisendes Plattensegment (23) umfasst, welches wenigstens zwei der Querträger (6) miteinander verbindet und lösbar an diesen befestigt ist, wobei zu den Seiten in Querrichtung jeweils ein planenartiges Abdeckelement (7) lösbar an dem Plattensegment (23) und dem Gestell (9) befestigt ist.

10. Schutzabdeckung nach einem der vorangehenden Ansprüche,
**dadurch gekennzeichnet,**
**dass** das Abdeckelement (7) oder wenigstens eines der Abdeckelemente (7) wenigstens eine Öffnung (21) aufweist.

11. Schutzabdeckung nach Anspruch 10,
**dadurch gekennzeichnet,**
**dass** die Öffnung (21) oder die Öffnungen (21) eines oder mehrerer Abdeckelemente (7) jeweils über eine aus einem flexiblen Material bestehende, klappbare Lasche (35) des Abdeckelements (7) abdeckbar sind.

12. Schutzabdeckung nach Anspruch 10 oder 11,
**dadurch gekennzeichnet,**
**dass** im Bereich einer oder mehrerer Öffnungen (21) jeweils eine lösbar befestigte Manschette (27) und/oder jeweils eine eine Öffnung (41) aufweisende Abdeckplatte (38) angeordnet ist.

13. Schutzabdeckung nach einem der vorangehenden Ansprüche,
**dadurch gekennzeichnet,**
**dass** das oder wenigstens eines der Abdeckelemente (7) wenigstens eine Stirnfläche des Gestells (9) abdeckt und/oder dass wenigstens ein weiteres Abdeckelement (7) vorgesehen ist, welches wenigstens eine Stirnfläche des Gestells (9) abdeckt.

14. Schutzabdeckung nach einem der vorangehenden Ansprüche,
**dadurch gekennzeichnet,**
**dass** das wenigstens eine Abdeckelement (7) aus einem flexiblen Werkstoff und/oder einem Textil besteht, insbesondere aus einem mit Polyurethan beschichteten Preox/Para-Aramid-Gewebe, einem Glasfasergewebe oder einem mit Polytetrafluorethylen beschichteten Glasfasergewebe.

15. Schutzabdeckung nach einem der vorangehenden Ansprüche,
**dadurch gekennzeichnet,**
**dass** das wenigstens eine Abdeckelement (7) eine Dicke zwischen 0,5 mm und 5 mm aufweist.

16. Schutzabdeckung nach einem der vorangehenden Ansprüche,
**dadurch gekennzeichnet,**
**dass** die im befestigten Zustand der Schutzabdeckung (3) zur Maschine (1) oder dem Abschnitt der Maschine (1) gerichtete Innenseite des wenigstens einen Abdeckelements (7) mit einem reflektierenden Material, insbesondere mit einer reflektierenden Folie, kaschiert ist und/oder dass an der Innenseite des Abdeckelements (7) wenigstens eine Leiste (34) und/oder wenigstens eine Platte aus einem formfesten und/oder magnetischen Material angeordnet ist.

17. Schutzabdeckung nach einem der vorangehenden Ansprüche,
**dadurch gekennzeichnet,**
**dass** wenigstens ein Abdeckelement (7) verschiebbar an wenigstens einem Längsträger (11, 12, 13) und/oder wenigstens einem Querträger (6) gelagert ist und/oder dass wenigstens ein Abdeckelement (7) klappbar an dem Gestell (9) gehaltert ist und/oder dass wenigstens ein Abdeckelement (7) eine aufklappbare Gaube und/oder ein transparentes Sichtfenster (36) und/oder wenigstens einen an der Außenfläche angeordneten Griff (39) aufweist.

18. Maschine, umfassend eine Schutzabdeckung nach einem der vorangehenden Ansprüche.

19. Maschine nach Anspruch 18,
**dadurch gekennzeichnet,**
**dass** die Maschine (1) ein Extruder und/oder dass der von der Schutzabdeckung (3) umgriffene Abschnitt der Maschine (1) ein Verfahrensteil (2) eines Extruders ist.

## Claims

1. Protective cover for a machine (1) or a portion of a machine (1), wherein the protective cover (3) comprises a frame (9) with fastening elements (8), via which the frame (9) can be fastened to a machine (1) or to a machine frame (5) which holds the machine, wherein the frame (9) has multiple crossmembers (6), which at least partially engage around the machine (1) or the portion of the machine (1) in the fastened state of the frame (9), and at least one tarpaulin-like covering element (7), which extends between the crossmembers (6) and at least partially along the crossmembers (6), is detachably fastened to the frame (9), wherein the covering element (7) is detachably fastened to the crossmembers (6) and/or the longitudinal members (11, 12, 13) via clamping means (16, 17) or via fastening means (14, 15, 24, 25) and clamping means (16, 17) .

2. Protective cover according to Claim 1,
**characterized in that**
the crossmembers (6) each extend in a plane, each crossmember (6) consisting of multiple segments (10), which are arranged in the plane of the crossmember (6) and are each connected to one another at an angle.

3. Protective cover according to Claim 1 or 2,
**characterized in that**
the frame (9) comprises one or more longitudinal members (11, 12, 13), which connect the crossmembers (6) to one another.

4. Protective cover according to Claim 3,
**characterized in that**
at least one longitudinal member (11, 12, 13) is arranged in the middle between two crossmembers (6).

5. Protective cover according to Claim 3 or 4,
**characterized in that**
at least two crossmembers (6) are connected via two longitudinal members (11, 12, 13) arranged on either side in the region of the lower ends of the crossmembers (6).

6. Protective cover according to Claim 5,
**characterized in that**
the covering element (7) is respectively detachably fastened by a fastening means (14, 15, 24, 25) to a longitudinal member (11) arranged in the region of the lower ends of two crossmembers (6) and by a clamping means (16, 17) to the oppositely situated longitudinal member (11), or **in that** the covering element (7) is detachably fastened to the two longitudinal members (11) by a respective fastening means (14, 15, 24, 25) or a respective clamping means (16, 17).

7. Protective cover according to Claim 5,
**characterized in that**
a fastening means (14, 15, 24, 25) comprises a keder of the covering element or a keder strip of the frame or a peg or an eye or a cutout or a perforated strip and/or **in that** a clamping means (16, 17) comprises a peg and a locking ring and/or an eye or a cutout and a clamping hook arrangement, comprising at least one hook connected to a spring and/or at least one eccentric clamp.

8. Protective cover according to one of the preceding claims,
**characterized in that**
the at least one covering element (7) comprises one or more magnets (19) fastened, in particular sewn, in a peripheral region of the covering element (7) and/or multiple press studs and/or at least one hook-and-loop closure, to by means of which the covering element (7) is detachably fastened to the frame (9) and/or at least one further covering element (7) of the protective cover (3) and/or to the machine (1) and/or to the machine frame (5).

9. Protective cover according to one of the preceding claims,
**characterized in that**
the frame (9) comprises at least one panel segment (23), which has at least one opening (21), connects at least two of the crossmembers (6) to one another and is detachably fastened thereto, a respective tarpaulin-like covering element (7) being detachably fastened to the panel segment (23) and the frame (9) at the sides in the transverse direction.

10. Protective cover according to one of the preceding claims,
**characterized in that**
the covering element (7) or at least one of the covering elements (7) has at least one opening (21).

11. Protective cover according to Claim 10,
**characterized in that**
the opening (21) or the openings (21) in one or more covering elements (7) can each be covered by a foldable flap (35), consisting of a flexible material, of the covering element (7).

12. Protective cover according to Claim 10 or 11,
**characterized in that**
a respective detachably fastened liner (27) and/or a respective covering panel (38) having an opening (41) is arranged in the region of one or more openings (21).

13. Protective cover according to one of the preceding claims,
**characterized in that**
the covering element or at least one of the covering elements (7) covers at least one end face of the frame (9) and/or **in that** at least one further covering element (7) covering at least one end face of the frame (9) is provided.

14. Protective cover according to one of the preceding claims,
**characterized in that**
the at least one covering element (7) consists of a flexible material and/or a textile, in particular a woven preox/para-aramid fabric coated with polyurethane, a woven glass-fibre fabric or a woven glass-fibre fabric coated with polytetrafluoroethylene.

15. Protective cover according to one of the preceding claims,
**characterized in that**
the at least one covering element (7) has a thickness between 0.5 mm and 5 mm.

16. Protective cover according to one of the preceding claims,
**characterized in that**
the inner side, which faces the machine (1) or the portion of the machine (1) in the fastened state of the protective cover (3), of the at least one covering element (7) is coated with a reflective material, in particular with a reflective foil, and/or **in that** at least one strip (34) and/or at least one panel made of a dimensionally stable and/or magnetic material is arranged on the inner side of the covering element (7).

17. Protective cover according to one of the preceding claims,
**characterized in that**
at least one covering element (7) is mounted displaceably on at least one longitudinal member (11, 12, 13) and/or at least one crossmember (6) and/or **in that** at least one covering element (7) is held foldably on the frame (9) and/or **in that** at least one covering element (7) has an unfoldable dormer and/or a transparent viewing window (36) and/or at least one handle (39) arranged on the outer surface.

18. Machine comprising a protective cover according to one of the preceding claims.

19. Machine according to Claim 18,
**characterized in that**
the machine (1) is an extruder and/or **in that** that portion of the machine (1) around which the protective cover (3) engages is a process section (2) of an extruder.

## Revendications

1. Capot de protection d'une machine (1) ou d'une portion d'une machine (1), le capot de protection (3) comportant un cadre (9) pourvu d'éléments de fixation (8) qui permettent de fixer le cadre (9) à une machine (1) ou à un bâti de machine (5) supportant la machine, le cadre (9) comportant plusieurs supports transversaux (6) qui entourent au moins par zones la machine (1) ou la portion de la machine (1) lorsque le cadre (9) est à l'état fixé, et au moins un élément de recouvrement (7) en forme de bâche, qui s'étend entre les supports transversaux (6) et au moins par portions le long des supports transversaux (6), étant fixé de manière amovible au cadre (9), l'élément de recouvrement (7) étant fixé de manière amovible aux supports transversaux (6) et/ou aux supports longitudinaux (11, 12, 13) par le biais de moyens de serrage (16, 17) ou de moyens de fixation (14, 15, 24, 25) et des moyens de serrage (16, 17).

2. Capot de protection selon la revendication 1,
**caractérisé en ce que**
les supports transversaux (6) s'étendent chacun dans un plan, un support transversal (6) comprenant plusieurs segments de support (10) qui sont disposés dans le plan du support transversal (6) et qui sont reliés angulairement les uns aux autres.

3. Capot de protection selon la revendication 1 ou 2,
**caractérisé en ce que**
le cadre (9) comprend un ou plusieurs supports longitudinaux (11, 12, 13) qui relient les supports transversaux (6) entre eux.

4. Capot de protection selon la revendication 3,
**caractérisé en ce que**
au moins un support longitudinal (11, 12, 13) est disposé au milieu entre deux supports transversaux (6).

5. Capot de protection selon la revendication 3 ou 4,
**caractérisé en ce que**
au moins deux supports transversaux (6) sont reliés par deux supports longitudinaux (11, 12, 13) disposés des deux côtés dans la zone des extrémités inférieures des supports transversaux (6).

6. Capot de protection selon la revendication 5,
**caractérisé en ce que**
l'élément de recouvrement (7) est fixé de manière amovible à l'un des supports longitudinaux (11), disposés dans la zone des extrémités inférieures de deux supports transversaux (6), à l'aide d'un moyen de fixation (14, 15, 24, 25) et au support longitudinal opposé (11) à l'aide d'un moyen de serrage (16, 17), ou l'élément de recouvrement (7) est fixé de manière amovible aux deux supports longitudinaux (11) à l'aide d'un moyen de fixation respectif (14, 15, 24, 25) ou d'un moyen de serrage respectif (16, 17).

7. Capot de protection selon la revendication 5,
**caractérisé en ce que**
un moyen de fixation (14, 15, 24, 25) comprend un bourrelet de l'élément de recouvrement ou une bande de bourrelet du cadre ou une goupille ou un œillet ou un évidement ou une bande perforée et/ou
un moyen de serrage (16, 17) comprend une goupille et une bague de serrage et/ou un œillet ou un évidement et un ensemble de crochet de serrage, comprenant au moins un crochet relié à un ressort et/ou au moins un tendeur excentrique.

8. Capot de protection selon l'une des revendications précédentes,
**caractérisé en ce que**
l'au moins un élément de recouvrement (7) comprend un ou plusieurs aimants (19) fixés, notamment cousus, dans une zone de bord de l'élément de recouvrement (7), et/ou plusieurs boutons de pression et/ou au moins une fermeture auto-agrippante sur avec lequel ou lesquelles l'élément de recouvrement (7) est fixé de manière amovible au cadre (9) et/ou au moins un autre élément de recouvrement (7) du capot de protection (3) et/ou à la machine (1) et/ou au bâti de machine (5).

9. Capot de protection selon l'une des revendications précédentes,
**caractérisé en ce que**
le cadre (9) comprend au moins un segment de plaque (23) qui comporte au moins une ouverture (21), qui relie au moins deux des supports transversaux (6) entre eux et qui est fixé à ceux-ci de manière amovible, un élément de recouvrement (7) en forme de bâche étant fixé de manière amovible au segment de plaque (23) et au cadre (9) de chaque côté dans la direction transversale.

10. Capot de protection selon l'une des revendications précédentes,
**caractérisé en ce que**
l'élément de recouvrement (7) ou au moins un des éléments de recouvrement (7) comporte au moins une ouverture (21).

11. Capot de protection selon la revendication 10,
**caractérisé en ce que**
l'ouverture (21) ou les ouvertures (21) des un ou de plusieurs éléments de recouvrement (7) peuvent être recouvertes par une languette pliable (35), en matière flexible, de l'élément de recouvrement (7).

12. Capot de protection selon la revendication 10 ou 11,
**caractérisé en ce que**
dans la zone des une ou plusieurs ouvertures (21) est à chaque fois disposé un manchon (27) fixé de manière amovible et/ou une plaque de recouvrement (38) comportant une ouverture (41).

13. Capot de protection selon l'une des revendications précédentes,
**caractérisé en ce que**
l'élément de recouvrement ou au moins un des éléments de recouvrement (7) recouvre au moins une surface frontale du cadre (9) et/ou au moins un autre élément de recouvrement (7) est prévu qui recouvre au moins une surface frontale du cadre (9).

14. Capot de protection selon l'une des revendications précédentes,
**caractérisé en ce que**
l'au moins un élément de recouvrement (7) est en une matière flexible et/ou un textile, en particulier un tissu Preox/Para-aramide recouvert de polyuréthane, un tissu de fibres de verre ou un tissu de fibres de verre recouvert de polytétrafluoroéthylène.

15. Capot de protection selon l'une des revendications précédentes,
**caractérisé en ce que**
l'au moins un élément de recouvrement (7) présente une épaisseur comprise entre 0,5 mm et 5 mm.

16. Capot de protection selon l'une des revendications précédentes,
**caractérisé en ce que**
le côté intérieur d'au moins un élément de recouvrement (7), qui est dirigé vers la machine (1) ou la portion de la machine (1) lorsque le capot de protection (3) est à l'état fixé, est recouvert d'une matière réfléchissante, en particulier d'un film réfléchissant et/ou **en ce qu'**au moins une bande (34) et/ou au moins une plaque de matière indéformable et/ou magnétique est disposée sur le côté intérieur de l'élément de recouvrement (7).

17. Capot de protection selon l'une des revendications précédentes,
**caractérisé en ce que**
au moins un élément de recouvrement (7) est monté de manière coulissante sur au moins un support longitudinal (11, 12, 13) et/ou au moins un support transversal (6) et/ou au moins un élément de recouvrement (7) est monté de manière pliable sur le cadre (9) et/ou au moins un élément de recouvrement (7) comporte une lucarne repliable et/ou une fenêtre de visualisation transparente (36) et/ou au moins une poignée (39) disposée sur la surface extérieure.

18. Machine comprenant un capot de protection selon l'une des revendications précédentes.

19. Machine selon la revendication 18,
**caractérisée en ce que**
la machine (1) est une extrudeuse et/ou la portion de la machine (1) entourée par le capot de protection (3) est une partie opérante (2) d'une extrudeuse.
